(19) Europäisches Patentamt
European Patent Office
Office européen des brevets

(11) EP 4 574 901 A1

(12) EUROPEAN PATENT APPLICATION
published in accordance with Art. 153(4) EPC

(43) Date of publication:
**25.06.2025 Bulletin 2025/26**

(21) Application number: **23854901.8**

(22) Date of filing: **16.08.2023**

(51) International Patent Classification (IPC):
***C08L 67/00*** *(2006.01)* ***C08G 63/78*** *(2006.01)*
***C08J 5/18*** *(2006.01)*

(52) Cooperative Patent Classification (CPC):
**C08G 63/78; C08J 5/18; C08L 67/00**

(86) International application number:
**PCT/JP2023/029576**

(87) International publication number:
**WO 2024/038867 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.08.2022 JP 2022130152**

(71) Applicant: **Toyobo Co., Ltd.**
**Kita-ku**
**Osaka-shi, Osaka 530-0001 (JP)**

(72) Inventors:
- **YOSHINO, Kenji**
**Osaka-shi, Osaka 530-0001 (JP)**
- **SHIBANO, Hiroshi**
**Osaka-shi, Osaka 530-0001 (JP)**
- **SASAI, Tamayo**
**Otsu-shi, Shiga 520-0292 (JP)**
- **KINAMI, Maki**
**Otsu-shi, Shiga 520-0292 (JP)**
- **YAMAMOTO, Yu**
**Otsu-shi, Shiga 520-0292 (JP)**
- **NISHINAKA, Fumiaki**
**Otsu-shi, Shiga 520-0292 (JP)**
- **MORIYAMA, Nobuo**
**Otsu-shi, Shiga 520-0292 (JP)**

(74) Representative: **Vossius & Partner**
**Patentanwälte Rechtsanwälte mbB**
**Siebertstrasse 3**
**81675 München (DE)**

# (54) METHOD FOR PRODUCING POLYESTER FILM USING RECYCLED POLYESTER RESIN, AND POLYESTER FILM

(57) An object of the present invention is to provide a method for producing a polyester film with high recycling efficiency in which coloring and decrease in molecular weight can be suppressed at the time of producing the polyester film by multiple times recycling a recovered polyester resin obtained by using at least one type of compound selected from among antimony compounds, titanium compounds, and germanium compounds as a polymerization catalyst.

The present invention relates to a method for producing a polyester film, comprising the steps of:
mixing a recovered polyester resin (A) with a polyester resin (B) containing an aluminum compound and a phosphorus compound, wherein the polyester resin (A) satisfies the following (1) to (3) and the polyester resin (B) satisfies the following (4):
(1) the polyester resin (A) contains at least one element selected from antimony element, titanium element, and germanium element,
(2) a total content of the antimony element, the titanium element, and the germanium element in the polyester resin (A) is 2 to 500 ppm by mass,
(3) the polyester resin (A) has an intrinsic viscosity of 0.5 to 0.8 dl/g, and
(4) the polyester resin (B) is obtained by polycondensation of a raw material containing bis-2-hydroxyethyl terephthalate obtained by decomposing polyester resin.

EP 4 574 901 A1

## Description

### TECHNICAL FIELD

The present invention relates to a method for producing a polyester film containing a recovered polyester resin and a polyester film obtained therefrom.

### BACKGROUND ART

The polyester resins represented by polyethylene terephthalate (PET) and polyethylene naphthalate (PEN) have high transparency, and excellent mechanical and chemical characteristics. The polyester resins have been used in various fields according to their characteristics, for example, as fibers for clothing and industrial materials, films or sheets for packaging and industrial purposes, and bottles (for example, hollow molded bodies).

In recent years, for example, hollow molded bodies produced from polyester resins have become more essential in our daily lives. However, with growing use of hollow molded bodies, various problems such as resource depletion, an increase in marine debris, and global warming have been caused. As a method to solve such problems, so-called recycling system involving collection and regeneration of hollow molded bodies in which hollow molded bodies including used polyester bottles are recovered and reused has attracted attentions.

In polyester film, various proposals have been made to use such recovered polyester resins as raw materials to form films.

The polyester resins are produced with an antimony compound, a titanium compound, or a germanium compound as a widely used polymerization catalyst. However, when the polyester resins are recovered after use and then regenerated, coloring and a decrease in molecular weight of the polyester resins are caused due to degradation of the recovered polyester resin. Therefore, improvements in the coloring and the decrease in molecular weight of the recovered polyester resin are needed. In the case of films, scraps of extended films such as edge parts of films generated during film production, are often reused as raw material resins, and polyester resins with less coloration and lower molecular weight due to heating and melting have been demanded for recovered polyester resins.

To solve above problems, methods involving addition of a hindered phenol compound are known specifically in the production of polyester resin with an antimony compound, a titanium compound, or a germanium compound as a polymerization catalyst (see, for example, Patent Documents 1 and 2).

According to the methods described in Patent Documents 1 and 2, thermal oxidation stability of polyester resin is improved by employing such methods, however, the polyester resin should have further improved characteristics to prevent degradation of physical characteristics of the polyester resin when recycled.

### PRIOR ART DOCUMENT

### PATENT DOCUMENT

Patent Document 1: International Publication No. WO2013/154042
Patent Document 2: International Publication No. WO2013/154043
Patent Document 3: International Publication No. WO2007/032325
Patent Document 4: Japanese Laid-Open Patent Publication No. 2006-169432

### SUMMARY OF THE INVENTION

### PROBLEMS TO BE SOLVED BY THE INVENTION

Against such backgrounds, the present inventors have come to a finding of a catalyst with excellent thermal stability for polyesters. Specifically, the present inventors have found that a catalyst containing an aluminum compound and a phosphorus compound having hindered phenol structure as described in Patent Documents 3 and 4 is used for polyesters to improve the transparency and the thermal stability of polyesters. However, recycling of used polyester resin produced with at least one type of polymerization catalyst selected from an antimony compound, a titanium compound, and a germanium compound has not been examined.

The present invention has been made to solve such problems of the conventional art, and an object of the present invention is to provide: a method for producing a polyester film in which coloring and decrease in molecular weight can be suppressed at the time of producing the polyester film by using a recovered polyester resin obtained by using at least one

type of compound selected from among antimony compounds, titanium compounds, and germanium compounds as a polymerization catalyst, and the polyester film can be produced with less degradation and increased recycling efficiency even in the case of reusing scraps of the film; and a polyester film containing the recovered polyester resin.

SOLUTION TO THE PROBLEMS

As a result of study to solve the above problem, the present inventors have found that a polyester resin containing an aluminum compound and a phosphorus compound is added to a recovered polyester resin containing at least one element selected from antimony element, titanium element, and germanium element, to obtain a polyester film with excellent recyclability and less coloration and lower molecular weight.

That is, the present invention contains the following constitutions:

[1] A method for producing a polyester film, comprising the steps of: mixing a recovered polyester resin (A) with a polyester resin (B) containing an aluminum compound and a phosphorus compound,
wherein the polyester resin (A) satisfies the following (1) to (3) and the polyester resin (B) satisfies the following (4):

(1) the polyester resin (A) comprises at least one element selected from antimony element, titanium element, and germanium element,
(2) a total content of the antimony element, the titanium element, and the germanium element in the polyester resin (A) is 2 to 500 ppm by mass,
(3) the polyester resin (A) has an intrinsic viscosity of 0.5 to 0.8 dl/g, and
(4) the polyester resin (B) is obtained by polycondensation of a raw material containing bis-2-hydroxyethyl terephthalate obtained by decomposing a polyester resin.

[2] The method for producing a polyester film according to [1], wherein the polyester resin (B) satisfies the following (5) and (6):

(5) a content of aluminum element in the polyester resin (B) is 5 to 50 ppm by mass, and
(6) a content of phosphorus element in the polyester resin (B) is 5 to 1000 ppm by mass.

[3] The method for producing a polyester film according to [1] or [2], wherein the mixing step comprises melting and mixing the polyester resin (A) and the polyester resin (B) to prepare a polyester resin composition (C).
[4] The method for producing a polyester film according to any one of [1] to [3], wherein the mixing step further comprises mixing a polyester resin (D) different from the polyester resin (A) and the polyester resin (B).
[5] A method for producing a polyester film, comprising the steps of: mixing a polyester resin composition (C) which is a melted mixture of a recovered polyester resin (A) and a polyester resin (B) containing an aluminum compound and a phosphorus compound, and a polyester resin (D) different from the polyester resin (A) and the polyester resin (B), the polyester resin (A) satisfies the following (1) to (3), and the polyester resin (B) satisfies the following (4):

(1) the polyester resin (A) comprises at least one element selected from antimony element, titanium element, and germanium element,
(2) a total content of the antimony element, the titanium element, and the germanium element in the polyester resin (A) is 2 to 500 ppm by mass,
(3) the polyester resin (A) has an intrinsic viscosity of 0.5 to 0.8 dl/g, and
(4) the polyester resin (B) is obtained by polycondensation of a raw material containing bis-2-hydroxyethyl terephthalate obtained by decomposing polyester resin.

[6] The method for producing a polyester film according to any one of [3] to [5], wherein the polyester resin composition (C) has an intrinsic viscosity retention rate of 89% or more as calculated by the following formula.

Intrinsic viscosity retention rate (%) = Intrinsic viscosity of the once re-kneaded sample/intrinsic viscosity of the sample $\times$ 100

(The once re-kneaded sample is a sample subjected to a twin-screw extruder at a temperature of 260°C, screw speed of 200 rpm, and discharge rate of 1.7 to 2.0 kg/h. Intrinsic viscosity is calculated by subjecting a solution of 0.2 g of sample and 20 ml of a mixture of 1,1,2,2-tetrachloroethane and p-chlorophenol (mass ratio 1:3) to an Ubbelohde viscometer at 30°C.)
[7] The method for producing a polyester film according to any one of [1] to [6], wherein the polyester resin (A) has an

intrinsic viscosity retention rate of 92% or less as calculated by the following formula.

Intrinsic viscosity retention rate (%) = Intrinsic viscosity of the once re-kneaded sample/intrinsic viscosity of the sample $\times$ 100

(The once re-kneaded sample is a sample subjected to a twin-screw extruder at a temperature of 260°C, screw speed of 200 rpm, and discharge rate of 1.7 to 2.0 kg/h. Intrinsic viscosity is calculated by subjecting a solution of 0.2 g of sample and 20 ml of a mixture of 1,1,2,2-tetrachloroethane and p-chlorophenol (mass ratio 1:3) to an Ubbelohde viscometer at 30°C.)
[8] The method for producing a polyester film according to any one of [1] to [7], wherein the polyester resin (B) has an intrinsic viscosity retention rate of 93% or more as calculated by the following formula.

Intrinsic viscosity retention rate (%) = Intrinsic viscosity of once re-kneaded sample/intrinsic viscosity of sample $\times$ 100

(The once re-kneaded sample is a sample subjected to a twin-screw extruder at a temperature 260°C, screw speed 200 rpm and discharge rate 1.7 to 2.0 kg/h. Intrinsic viscosity is calculated by subjecting a solution of 0.2 g of sample and 20 ml of a mixture of 1,1,2,2-tetrachloroethane and p-chlorophenol (mass ratio 1:3) to an Ubbelohde viscometer at 30°C.)
[9] The method for producing a polyester film according to any one of [4] to [8], wherein the polyester resin composition (E) containing the polyester resin (A), the polyester resin (B), and the polyester resin (D) has an intrinsic viscosity retention rate of 89% or more as calculated by the following formula.

Intrinsic viscosity retention rate (%) = Intrinsic viscosity of once re-kneaded sample/intrinsic viscosity of sample $\times$ 100

(The once re-kneaded sample is a sample subjected to a twin-screw extruder at a temperature of 260°C, screw speed of 200 rpm, and discharge rate of 1.7 to 2.0 kg/h. Intrinsic viscosity is calculated by subjecting a solution of 0.2 g of sample and 20 ml of a mixture of 1,1,2,2-tetrachloroethane and p-chlorophenol (mass ratio 1:3) to an Ubbelohde viscometer at 30°C.)
[10] The method for producing a polyester film according to any one of [1] to [9], wherein a content of the polyester resin (A) is 5 to 95 parts by mass relative to 100 parts by mass of the total of the polyester resin (A) and the polyester resin (B).
[11] The method for producing a polyester film according to any one of [4] to [10], wherein a content of the polyester resin (D) is 5 to 95 parts by mass relative to 100 parts by mass of the total of the polyester resin (A), the polyester resin (B) and the polyester resin (D).
[12] The method for producing a polyester film according to any one of [1] to [11], wherein the polyester film is a multilayer polyester film comprising at least two layers, and at least one surface layer is a layer that does not contain the polyester resin (A).
[13] The method for producing a polyester film according to any one of [1] to [12], wherein the phosphorus compound has phosphorus element and phenol structure in the same molecule.
[14] The method for producing a polyester film according to any one of [1] to [13], wherein the polyester resin (A) comprises at least the antimony element and the germanium element.
[15] The method for producing a polyester film according to any one of [1] to [14], wherein the polyester resin (A) comprises at least an isophthalic acid component unit as a copolymerization component.
[16] A polyester film comprising a polyester resin composition (E) comprising a recovered polyester resin (A) and a polyester resin (B) containing an aluminum compound and a phosphorus compound, wherein the polyester resin (A) satisfies the following (1) to (3) and the polyester resin (B) satisfies the following (4):

(1) the polyester resin (A) comprises at least one element selected from antimony element, titanium element, and germanium element,
(2) a total content of the antimony element, the titanium element, and the germanium element in the polyester resin (A) is 2 to 500 ppm by mass,
(3) the polyester resin (A) has an intrinsic viscosity of 0.5 to 0.8 dl/g, and
(4) the polyester resin (B) is obtained by polycondensation of a raw material containing bis-2-hydroxyethyl terephthalate as a polyester resin degradation component.

[17] The polyester film according to [16], wherein the polyester resin (B) satisfies the following (5) and (6):

(5) a content of aluminum element in the polyester resin (B) is 5 to 50 ppm by mass, and
(6) a content of phosphorus element in the polyester resin (B) is 5 to 1000 ppm by mass.

[18] The polyester film according to [16] or [17], wherein the polyester resin composition (E) further comprises a polyester resin (D) different from the polyester resin (A) and the polyester resin (B).
[19] The polyester film according to any one of [16] to [18], wherein the polyester resin composition (E) has an intrinsic viscosity retention rate of 89% or more as calculated by the following formula.

Intrinsic viscosity retention rate (%) = Intrinsic viscosity of once re-kneaded sample/intrinsic viscosity of sample $\times$ 100

(The once re-kneaded sample is a sample subjected to a twin-screw extruder at a temperature of 260°C, screw speed of 200 rpm, and discharge rate of 1.7 to 2.0 kg/h. The intrinsic viscosity is calculated by subjecting a solution of 0.2 g of the sample and 20 ml of a mixture of 1,1,2,2-tetrachloroethane and p-chlorophenol (mass ratio 1:3) to an Ubbelohde viscometer at 30°C.)
[20] The polyester film according to any one of [16] to [19], wherein the polyester resin composition (E) comprises at least the antimony element, the germanium element, the phosphorus element and the aluminum element.
[21] The polyester film according to [20], wherein at least one polyester resin contained in the polyester resin composition (E) comprising the film contains an isophthalic acid component unit as a copolymerization component.
[22] The polyester film according to any one of [16] to [21], wherein a content ratio of the antimony element/the aluminum element is from 0.5 to 200 on a mass basis.
[23] The polyester film according to any one of [16] to [22], wherein a content ratio of the antimony element/(the aluminum element and the phosphorus element) is from 0.1 to 100 on a mass basis.

## ADVANTAGEOUS EFFECTS OF THE INVENTION

According to the present invention, a polyester film can be produced with less degradation of resin, lower molecular weight, and less coloring even in the case of using a recovered polyester as a raw material. Furthermore, the proportion of the recovered polyester can be increased to the entirety of the polyester film and further effect of decreasing load on the environment can be increased.

## DESCRIPTION OF EMBODIMENTS

A method for producing a polyester film according to the present invention includes a step of mixing a recovered polyester resin (A) and a polyester resin (B) comprising an aluminum compound and a phosphorus compound, and the polyester resin (A) satisfies the following (1) to (3) with regard to a predetermined catalyst, a predetermined catalyst amount, and a predetermined intrinsic viscosity; and the polyester resin (B) satisfies the following (4), that is, the polyester resin (B) is obtained by polycondensation of a raw material containing bis(2-hydroxyethyl) terephthalate as a polyester resin-decomposed component.
The polyester resin (A) contains a recovered polyester resin product as a materially recycled polyester resin, and the polyester resin (B) contains a polycondensation substance of a polyester resin-decomposed component as a chemically recycled polyester resin.
The polyester film obtained in the present invention has a high recycling efficiency and hardly sustains decrease in molecular weight, coloring, or the like.

### [Polyester Resin (A)]

The polyester resin (A) is obtained by recovering a polyester resin having been used. The polyester resin (A) having been used refers to a resin temporarily melted in order to manufacture a molded body of the polyester. Examples of the resin include: recovered containers such as PET bottles and trays, recovered fibers, and recovered products; articles released before being formed into products in manufacturing; products that are imperfect articles and thus have not been shipped to the market; edge portions gripped during film stretching; offcuts obtained in formation of a slit; molded articles returned as a result of complaints or the like; and the like.
The polyester resin (A) may be a single one of recovered polyester resin products such as recovered PET bottles and edge portions of films; or a mixture of different ones of the recovered polyester resin products.
The polyester resin (A) preferably has such a form as to be easily mixed with the polyester resin (B). Examples of the form of the polyester resin (A) include chips, flakes, powder, and the like.
Similar to the polyester resin (B) described later, the polyester resin (A) is preferably a polymer of a polyvalent

carboxylic acid component and a polyhydric alcohol component.

Examples of the polyvalent carboxylic acid component and the polyhydric alcohol component include the same components as those of the polyester resin (B) described later. The polyvalent carboxylic acid component is preferably a dicarboxylic acid (preferably an aromatic dicarboxylic acid) such as isophthalic acid or terephthalic acid among the components, and the polyhydric alcohol component is preferably a dihydric alcohol (preferably ethylene glycol) such as ethylene glycol, diethylene glycol, neopentyl glycol, 1,6-hexanediol, or 1,4-cyclohexanediol among the components.

The polyester resin (A) preferably contains an ethylene terephthalate structural unit which is a polycondensation substance of terephthalic acid as a polyvalent carboxylic acid component and ethylene glycol as a polyhydric alcohol component, among the components.

The polyester resin (A) contains the ethylene terephthalate structural unit of preferably 50 mol% or higher, more preferably 70 mol% or higher, further preferably 80 mol% or higher, and particularly preferably 90 mol% or higher in 100 mol% of a longest structural unit forming the polyester resin. Components explained in relation to the polyester resin (B) described later can be used as a polyvalent carboxylic acid component other than the terephthalic acid and a polyhydric alcohol component other than the ethylene glycol.

For the polyester resin (A), a polyethylene terephthalate resin is preferably used from the viewpoint of controlling the quality and improving the recycling efficiency. In this case, the polyester resin (A) may contain at least the constituent unit of isophthalic acid as a copolymerization component. When the total amount of all the constituent units of polyvalent carboxylic acid components is defined as 100 mol%, the lower limit for the content of the constituent unit of the isophthalic acid is preferably 0.02 mol%, more preferably 0.05 mol%, further preferably 0.1 mol%, particularly preferably 0.2 mol%, and most preferably 0.3 mol%. The upper limit for said content is preferably 5.0 mol%, more preferably 4.0 mol%, further preferably 3.0 mol%, particularly preferably 2.5 mol%, and most preferably 2.0 mol%.

In the polyester resin, diethylene glycol as a polyhydric alcohol component may not only be contained as a byproduct of the ethylene glycol at the time of polyester polymerization but also be added at the time of polymerization in order to adjust crystallization.

When the total amount of all the constituent units of polyhydric alcohol components is defined as 100 mol%, the lower limit for the content of the constituent unit of the diethylene glycol in the polyester resin (A) is preferably 0.5 mol%, more preferably 0.8 mol%, further preferably 1.0 mol%, particularly preferably 1.2 mol%, and most preferably 1.4 mol%. The upper limit for the content is preferably 5.0 mol%, more preferably 4.0 mol%, further preferably 3.5 mol%, and particularly preferably 3.0 mol%.

Copolymerization components other than the isophthalic acid and the diethylene glycol (e.g., orthophthalic acid or naphthalenedicarboxylic acid, and neopentyl glycol, 1,6-hexanediol, or 1,4-cyclohexanediol) in the polyester resin (A) may be present among the polyvalent carboxylic acid components and the polyhydric alcohol components, respectively. When the total amount of all the constituent units of the polyvalent carboxylic acid components is defined as 100 mol% and the total amount of all the constituent units of the polyhydric alcohol components is defined as 100 mol%, the upper limit for the amount of each of the copolymerization components is preferably 3.0 mol%, more preferably 2.5 mol%, and further preferably 2.0 mol%.

When the sum of the total amount of all the constituent units of the polyvalent carboxylic acid components and the total amount of all the constituent units of the polyhydric alcohol components is defined as 200 mol%, the total amount of the copolymerization components (preferably copolymerization components other than terephthalic acid and ethylene glycol) in the polyester resin (A) is the total amount of copolymerization constituent units as polyvalent carboxylic acid components and copolymerization constituent units as polyhydric alcohol components. The lower limit for the total amount is preferably 0.5 mol%, more preferably 1.0 mol%, further preferably 1.5 mol%, and particularly preferably 2.0 mol%. The upper limit for the total amount is preferably 7.0 mol%, more preferably 6.0 mol%, further preferably 5.0 mol%, and particularly preferably 4.0 mol%. When the above upper limit is exceeded, the heat resistance and the mechanical strength of the obtained polyester film might be decreased, and, in order to prevent these decreases, the addition amount of the recovered polyester resin (A) may be limited.

Polyester resin (A) (1)

The polyester resin (A) contains at least one element selected from antimony element, titanium element, and germanium element, i.e., the polyester resin (A) is produced with at least one polymerization catalyst selected from an antimony compound, a titanium compound, and a germanium compound in a catalytic amount.

The polyester resin (A) preferably contains at least two elements selected from the antimony element, the titanium element, and the germanium element, and more preferably contains at least the antimony element and the germanium element, and further preferably contains the antimony element, the titanium element, and the germanium element.

Polyester resin (A) (2)

A total content of the antimony element, the titanium element, and the germanium element in the polyester resin (A) is from 2 to 500 ppm by mass, preferably 5 to 400 ppm by mass, more preferably 10 to 300 ppm by mass, and further preferably 50 to 250 ppm by mass. The total content of more than 500 ppm by mass may cause insufficient intrinsic viscosity retention rate of the polyester resin composition (C). Throughout the specification, the term 'ppm by mass' indicates $10^{-4}$% by mass.
The content of the antimony element in the polyester resin (A) is preferably 2 to 500 ppm by mass, more preferably 5 to 400 ppm by mass, further preferably 10 to 300 ppm by mass, and even more preferably 50 to 250 ppm by mass.
The content of the germanium element in the polyester resin (A) is preferably 0.1 to 50 ppm by mass, more preferably 0.5 to 30 ppm by mass, and further preferably 1 to 10 ppm by mass.
The content of the titanium element in the polyester resin (A) is preferably 0.01 to 10 ppm by mass, more preferably 0.02 to 5 ppm by mass, and further preferably 0.03 to 3 ppm by mass.
The polyester resin (A) may be one type of polyester resin or may be obtained by combining two or more types of polyester resins. In a case where two or more types of polyester resins (A) are used, the contents of the above elements may be average values.
The contents of the antimony element, the titanium element, and the germanium element are measured through, for example, a method explained in EXAMPLES described later.
The polyester resin (A) may contain a colorant, lubricant particles, an ultraviolet absorber, a melt specific resistance adjusting agent, an antistatic agent, an antioxidant, a heat stabilizer, or the like.

Polyester Resin (A) (3)

The polyester resin (A) has an intrinsic viscosity of preferably 0.5 to 0.8 dl/g, more preferably 0.55 to 0.77 dl/g, and further preferably 0.57 to 0.75 dl/g.
When the intrinsic viscosity of the polyester resin (A) is lower than the lower limit of the above range, the mechanical strength and the impact resistance of a polyester film manufactured by using the polyester resin (A) may become insufficient. Meanwhile, when the intrinsic viscosity of the polyester resin (A) is higher than the upper limit of the above range, the amount of locally generated shear heat at the time of mixing (preferably melting and mixing) the polyester resin (A) with the polyester resin (B) might become large so as to degrade the resin, or a stress to be applied during stretching may become high so as to make it difficult to manufacture a film. In addition, the intrinsic viscosity and the amount of the polyester resin (B) to be mixed might be limited. The intrinsic viscosity of the polyester resin (A) can be measured as described in EXAMPLES.
The polyester resin for use in the present invention is repeatedly reused and is melted at high temperature at the time of reuse, and thus a change rate (i.e., intrinsic viscosity retention rate) of the intrinsic viscosity of the polyester resin having been reused relative to the intrinsic viscosity of the polyester resin having yet to be reused is employed as an index.
The polyester resin (A) has an intrinsic viscosity retention rate of preferably 92% or lower, more preferably 91% or lower, further preferably 90% or lower, and particularly preferably 89% or lower. When the intrinsic viscosity retention rate of the polyester resin (A) is higher than 92%, a recycling efficiency-improving effect obtained by blending the polyester resin (B) might be saturated. A measurement method for the intrinsic viscosity retention rate will be described later.
The polyester resin (A) has an intrinsic viscosity retention rate of preferably 70% or higher, more preferably 75% or higher, and further preferably 80% or higher. When the intrinsic viscosity retention rate of the polyester resin (A) is lower than 70%, a sufficient enhancement effect is not obtained even by adding the polyester resin (B), or the amount of the polyester resin (A) to be used needs to be set to a small value.
In a case where the polyester resin (A) is formed from a recovered PET bottle, the amount of a CT (cyclic trimer) contained in the polyester resin (A) is preferably 9000 ppm by mass or lower, more preferably 8000 ppm by mass or lower, further preferably 7500 ppm by mass or lower, and particularly preferably 7000 ppm by mass or lower. The CT content is preferably 4000 ppm by mass or higher, more preferably 4500 ppm by mass or higher, and further preferably 4900 ppm by mass or higher.
The polyester resin (A) preferably consists of a polyester resin produced with at least one type of a polymerization catalyst selected from the group consisting of an antimony compound, a titanium compound, and a germanium compound. The polyester resin (A) may comprise the polyester resin produced with a polymerization catalyst containing an aluminum compound and a phosphorus compound. The amount of the polyester resin produced with the at least one type of polymerization catalyst selected from the group consisting of the antimony compound, the titanium compound, and the germanium compound in the polyester resin (A) is preferably more than 50% by mass, more preferably 70% by mass or more, further preferably 80% by mass or more, furthermore preferably 90 % by mass or more, and particularly preferably 95% by mass or more.

The polyester resin (A) may be in the form of pellets obtained through melting of the recovered molded body or the like and is preferably kept in a pulverized state without being melted. The pulverized substance has a shape in which the longest distance between two points is preferably 3 to 30 mm and more preferably 5 to 20 mm from the viewpoint of handleability. This value may be an average value obtained by extracting 100 g of pulverized substances and selecting 20 large, pulverized substances.

[Polyester Resin (B)]

Polyester Resin (B) (4)

The polyester resin (B) contains an aluminum compound and a phosphorus compound. That is, the polyester resin (B) is manufactured by using, in a catalyst amount, a polymerization catalyst formed from an aluminum compound and a phosphorus compound. Furthermore, the polyester resin (B) is obtained by polycondensation of a raw material containing bis(2-hydroxyethyl) terephthalate as a polyester resin-decomposed component. The bis(2-hydroxyethyl) terephthalate obtained by decomposing a polyester resin is sometimes referred to as "chemically recycled BHET".

The chemically recycled BHET is obtained by heating and depolymerizing polyethylene terephthalate (PET) in the presence of ethylene glycol. The PET as a starting material is preferably PET having been used, and examples of the PET having been used include: recovered containers such as PET bottles and trays, recovered fibers, and recovered products; articles released before being formed into products in manufacturing; products that are imperfect articles and thus have not been shipped to the market; edge portions gripped during film stretching; offcuts obtained in formation of a slit; molded articles returned as a result of complaints or the like; and the like. Terephthalic acid and ethylene glycol of each of these PETs as starting materials may be derived from petroleum or derived from biomass. Alternatively, PET may be derived from a mechanically recycled molded article. Alternatively, a mixture of these PETs may be used.

These PETs as starting materials are preferably utilized in an opening polymerization step after being pulverized, rinsed, and cleared of foreign matter.

The BHET obtained through chemical recycling does not have to contain a pigment, a dye, a catalyst, metal ions, or the like contained in the PET and may contain a linear dimer, trimer, or the like.

The BHET as a chemically recycled PET-decomposed component may contain a dicarboxylic acid component other than the terephthalic acid component and a glycol component other than the ethylene glycol. Examples of the dicarboxylic acid component other than the terephthalic acid component include naphthalenedicarboxylic acid, isophthalic acid, and the like, and examples of the glycol component other than the ethylene glycol include diethylene glycol, neopentyl glycol, cyclohexanedimethanol, trimethylene glycol, tetramethylene glycol, and the like.

It is preferable that the chemically recycled BHET is mixed with the aluminum compound and the phosphorus compound as a polycondensation catalyst, and the resultant mixture is heated under a decreased pressure and subjected to polycondensation so that PET is synthesized. In this case, the lower limit for the amount of the chemically recycled BHET is preferably 50% by mass, more preferably 60% by mass, further preferably 70% by mass, particularly preferably 80% by mass, and most preferably 90% by mass with respect to the total amount of all BHETs. When said amount is set to be the above lower limit or higher, environmental adaptability (e.g., easiness of preparation of a polyester resin composition, easiness of preparation of a polyester film, or the like) can be improved.

The amount of the chemically recycled BHET may be 100% by mass with respect to the total amount of all the BHETs.

When the total amount of all the constituent units of polyvalent carboxylic acid components is defined as 100 mol% or the total amount of all the constituent units of polyhydric alcohol components is defined as 100 mol%, the amount of the constituent unit of a dicarboxylic acid component other than a polyvalent carboxylic acid component (preferably the terephthalic acid component) in the chemically recycled BHET and the amount of the constituent unit of a glycol component other than a polyhydric alcohol component (preferably the ethylene glycol component) in the chemically recycled BHET are each preferably 2 mol% or lower, more preferably 1.7 mol% or lower, further preferably 1.5 mol% or lower, even more preferably 1.0 mol% or lower, particularly preferably 0.7 mol% or lower, and most preferably 0.5 mol% or lower. Representative examples of the dicarboxylic acid component other than the terephthalic acid component include an isophthalic acid component, and the amount of the isophthalic acid component is also as described above. Representative examples of the glycol component other than the ethylene glycol component include diethylene glycol, and the amount of the diethylene glycol component is also as described above.

As described above, the chemically recycled BHET is preferably obtained by depolymerizing PETs including recovered articles from the market. Although components other than PETs are sometimes added to such recovered PETs from the market in order to adjust crystallinity and physical properties, it is not preferable that: only a pure PET is selected from among the recovered substances; or the chemically recycled BHET is purified to such a level that components other than the terephthalic acid and the ethylene glycol are not detected. Therefore, the amount of the constituent unit of the dicarboxylic acid component other than the terephthalic acid component in the chemically recycled BHET and the amount

of the constituent unit of the glycol component other than the ethylene glycol in the chemically recycled BHET are each preferably 0.01 mol% or higher and more preferably 0.05 mol% or higher.

The polyester resin (B) contains at least one substance selected from polyvalent carboxylic acids and ester-forming derivatives thereof and at least one substance selected from polyhydric alcohols and ester-forming derivatives thereof in addition to BHET.

<Polyvalent Carboxylic Acid Component>

A main polyvalent carboxylic acid component forming the polyester resin (B) is preferably terephthalic acid as a main component. The amount of the constituent unit of the terephthalic acid is preferably 50 mol% or higher, more preferably 60 mol% or higher, and further preferably 65 mol% or higher with respect to 100 mol% of the total amount of all the constituent units of the polyvalent carboxylic acid components.

The terephthalic acid component is preferably derived from the chemically recycled BHET. The amount of the constituent unit of the terephthalic acid derived from the chemically recycled BHET among all the constituent units of terephthalic acid components is preferably 70 mol% or higher, more preferably 80 mol% or higher, and further preferably 90 mol% or higher.

Therefore, the constituent unit of a polyvalent carboxylic acid component other than the terephthalic acid component is preferably contained among the polyvalent carboxylic acid components forming the polyester resin (B). A preferable lower limit for the amount of the constituent unit of the polyvalent carboxylic acid component is 0.007 mol% (based on 0.01 mol% which is a preferable lower limit for the amount of the constituent unit of the polyvalent carboxylic acid component other than the terephthalic acid component in the chemically recycled BHET and 70 mol% which is a preferable lower limit for the amount of the constituent unit of the terephthalic acid derived from the chemically recycled BHET among the constituent units of the terephthalic acid components), and thus the amount of the constituent unit of the terephthalic acid in the polyester resin (B) is preferably 99.993 mol% or lower with respect to 100 mol% of the total amount of all the constituent units of the polyvalent carboxylic acid components. In a case where the constituent units of the polyvalent carboxylic acid components used for the polyester resin (B) are formed from the constituent unit of terephthalic acid and the constituent unit of isophthalic acid, the amount of the constituent unit of the terephthalic acid in the polyester resin (B) is more preferably 99.99 mol% or lower, further preferably 99.95 mol% or lower, and even more preferably 99.90 mol% or lower.

Examples of dicarboxylic acids other than the terephthalic acid include saturated aliphatic dicarboxylic acids such as oxalic acid, malonic acid, succinic acid, glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid, 1,3-cyclobutane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, 2,5-norbornane dicarboxylic acid, and dimer acid, or ester-forming derivatives thereof; unsaturated aliphatic dicarboxylic acids such as fumaric acid, maleic acid, and itaconic acid, or ester-forming derivatives thereof; and aromatic dicarboxylic acids such as orthophthalic acid, isophthalic acid, terephthalic acid, 5-(alkali metal)sulfoisophthalic acids, diphenic acid, 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, 4,4'-biphenyldicarboxylic acid, 4,4'-biphenyl sulfone dicarboxylic acid, 4,4'-biphenyl ether dicarboxylic acid, 1,2-bis(phenoxy)ethane-p,p'-dicarboxylic acid, pamoic acid, and anthracene dicarboxylic acid, or ester-forming derivatives thereof.

As a polyvalent carboxylic acid other than these dicarboxylic acids, a trivalent or higher polyvalent carboxylic acid or hydroxycarboxylic acid may also be used in a small amount, and a trivalent to tetravalent polyvalent carboxylic acid is preferable. Examples of polyvalent carboxylic acids include ethane tricarboxylic acid, propane tricarboxylic acid, butane tetracarboxylic acid, pyromellitic acid, trimellitic acid, trimesic acid, 3,4,3',4'-biphenyltetracarboxylic acid, and ester-forming derivatives thereof. The amount of the trivalent or higher polyvalent carboxylic acid with respect to the entire polyvalent carboxylic acid component is preferably 20 mol% or less, more preferably 10 mol% or less, and further preferably 5 mol% or less. In the case where two or more trivalent or higher polyvalent carboxylic acids are used, the total amount of these polyvalent carboxylic acids is preferably in the above range.

Examples of hydroxycarboxylic acids include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexane carboxylic acid, or ester-forming derivatives thereof. The amount of the hydroxycarboxylic acid with respect to the entire polyvalent carboxylic acid component is preferably 20 mol% or less, more preferably 10 mol% or less, and further preferably 5 mol% or less. In the case where two or more hydroxycarboxylic acids are used, the total amount of these hydroxycarboxylic acids is preferably in the above range.

Examples of ester-forming derivatives of polyvalent carboxylic acids or hydroxycarboxylic acids include alkyl esters, acid chlorides, and acid anhydrides thereof.

<Polyhydric Alcohol Component>

A main polyhydric alcohol component forming the polyester resin (B) is preferably ethylene glycol as a main component. The amount of the constituent unit of the ethylene glycol is preferably 50 mol% or higher and 99.99 mol% or lower, more preferably 60 mol% or higher and 99.95 mol% or lower, and further preferably 65 mol% or higher and 99.90 mol% or lower with respect to 100 mol% of the total amount of all the constituent units of the polyhydric alcohol components. The ethylene glycol component is preferably derived from the chemically recycled BHET. The amount of the constituent unit of the ethylene glycol derived from the chemically recycled BHET among all the constituent units of the polyhydric alcohol components is preferably 70 mol% or higher, more preferably 80 mol% or higher, and further preferably 90 mol% or higher.

Examples of glycols other than ethylene glycol include: alkylene glycols such as 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentylglycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, and 1,12-dodecanediol; aliphatic glycols such as polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols.

Among these glycols, neopentylglycol, 1,3-propylene glycol, 1,4-butylene glycol, and 1,4-cyclohexanedimethanol are preferable. In addition, the alkylene glycols may contain a substituent or an alicyclic structure in the molecular chain thereof, and two or more of the alkylene glycols may be used at the same time.

As a polyhydric alcohol other than these glycols, a trivalent or higher polyhydric alcohol may also be used in a small amount, and a trivalent to tetravalent polyhydric alcohol is preferable. Examples of trivalent or higher polyhydric alcohols include trimethylolmethane, trimethylolethane, trimethylolpropane, pentaerythritol, glycerol, and hexanetriol.

The amount of the trivalent or higher polyhydric alcohol with respect to the entire polyhydric alcohol component is preferably 20 mol% or less, more preferably 10 mol% or less, and further preferably 5 mol% or less. In the case where two or more trivalent or higher polyhydric alcohols are used, the total amount of the polyhydric alcohols is preferably in the above range.

In addition, use of a cyclic ester is also permitted. Examples of cyclic esters include ε-caprolactone, β-propiolactone, β-methyl-β-propiolactone, δ-valerolactone, glycolide, and lactide. Moreover, examples of ester-forming derivatives of polyhydric alcohols include esters of lower aliphatic carboxylic acids such as acetates of polyhydric alcohols.

The amount of the cyclic ester with respect to the total 200 mol% of the entire polyvalent carboxylic acid component and the entire polyhydric alcohol component is preferably 20 mol% or less, more preferably 10 mol% or less, and further preferably 5 mol% or less. In the case where two or more cyclic esters are used, the total amount of these cyclic esters is preferably in the above range.

The composition of the polyester resin (B) only has to be determined according to the composition of the film to be manufactured, also in consideration of the composition of the polyester resin (A). For example, in a case where the polyester resin (A) is mainly formed from a recovered article of a beverage bottle, the main structural unit of the polyester resin (A) is ethylene terephthalate, and thus, in the case of manufacturing a polyethylene terephthalate film, the polyester resin (B) is also formed from polyethylene terephthalate. In this case, the polyester resin (B) contains a component derived from an ethylene terephthalate monomer in an amount of preferably 90 mol% or higher, more preferably 95 mol% or higher, and further preferably 97 mol% or higher. Thus, the polyester resin (B) contains a copolymerization component derived from the chemically recycled BHET, and representative examples of the copolymerization component include an isophthalic acid component as described above. In a case where the polyester resin (B) is formed from polyethylene terephthalate, a preferable amount of the isophthalic acid component is the same as the preferable amount presented in the description of the chemically recycled BHET.

Specifically, in the case where the polyester resin (B) is formed from polyethylene terephthalate, when the total amount of all the constituent units of the polyvalent carboxylic acid components is defined as 100 mol%, the preferable amount of the isophthalic acid component is preferably 2 mol% or lower, more preferably 1.7 mol% or lower, further preferably 1.5 mol% or lower, even more preferably 1.0 mol% or lower, particularly preferably 0.7 mol% or lower, and most preferably 0.5 mol% or lower. Regarding the lower limit, the amount of the isophthalic acid component is preferably 0.01 mol% or higher and more preferably 0.05 mol% or higher.

In the case where the polyester resin (A) is mainly formed from a recovered article of a beverage bottle, the constituent unit of isophthalic acid is contained in the polyester resin (A) in many cases. Thus, when the amount of the constituent unit of the above isophthalic acid in the polyethylene terephthalate as the polyester resin (B) falls within the above range, the lamination strength, the property of close contact, and the like of the obtained film can be improved to have stable values even with a different mixing ratio between the polyester resin (A) and the polyester resin (B). In addition,

the constituent unit of diethylene glycol is contained in the polyester resin (A), and, when the amount of the constituent unit of the above diethylene glycol in the polyethylene terephthalate as the polyester resin (B) falls within the above range, the lamination strength, the property of close contact, and the like of the obtained film can be set to have stable values even with a different mixing ratio between the polyester resin (A) and the polyester resin (B).

Meanwhile, in a case where the film to be manufactured is a heat shrinkable film, a film for molding processing, or the like, the polyester resin (B) is preferably a copolymerized polyester resin.

Examples of the copolymerized polyester resin include: ethylene terephthalate-isophthalate copolymers, ethylene/butylene terephthalate copolymers, ethylene/2,2-dimethylpropylene terephthalate copolymers (obtained by adding neopentyl glycol to a glycol component), ethylene/2,2'-oxydiethylene copolymers (obtained by adding diethylene glycol to a glycol component), ethylene/1,4-cyclohexanedimethylene terephthalate copolymers (obtained by adding 1,4-cyclohexanedimethanol to a glycol component), and the like; and furthermore, copolymerized polyester resins obtained by copolymerizing another component with these copolymers.

<Polymerization catalyst>

The polyester resin (B) is produced by using a polymerization catalyst consisting of an aluminum compound and a phosphorus compound.

(Aluminum compound)

The aluminum compound constituting the polymerization catalyst of the polyester resin (B) is not limited as long as the aluminum compound is soluble in a solvent, and known aluminum compounds can be used without limitation. Examples of the aluminum compound include: carboxylates such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum citrate, aluminum tartrate, and aluminum salicylate; inorganic acid salts such as aluminum chloride, aluminum hydroxide, aluminum hydroxychloride, aluminum nitrate, aluminum sulfate, aluminum carbonate, aluminum phosphate, and aluminum phosphonate; aluminum alkoxides such as aluminum methoxide, aluminum ethoxide, aluminum n-propoxide, aluminum isopropoxide, aluminum n-butoxide, and aluminum t-butoxide; chelate compounds such as aluminum acetylacetonate, aluminum ethylacetoacetate, and aluminum ethylacetoacetate di-iso-propoxide; and organic aluminum compounds such as trimethylaluminum and triethylaluminum and partially hydrolyzed products thereof, reaction products composed of aluminum alkoxides or aluminum chelate compounds and hydroxycarboxylic acids, composite oxides of aluminum, such as aluminum oxide, ultrafine particle aluminum oxide, aluminum silicate, those containing aluminum and titanium, silicon, zirconium, alkali metals, alkaline earth metals, or the like; etc. Among these compounds, at least one compound selected from carboxylates, inorganic acid salts, and chelate compounds is preferable; among these compounds, at least one compound selected from aluminum acetate, basic aluminum acetate, aluminum chloride, aluminum hydroxide, aluminum hydroxychloride, and aluminum acetylacetonate is more preferable; at least one compound selected from aluminum acetate, basic aluminum acetate, aluminum chloride, aluminum hydroxide, aluminum hydroxychloride, and aluminum acetylacetonate is further preferable; and at least one compound selected from aluminum acetate and basic aluminum acetate is particularly preferable; and basic aluminum acetate is most preferable.

The above aluminum compound is preferably an aluminum compound that is soluble in a solvent such as water or a glycol. Solvents that can be used in the preparation of the polyester resin (B) are water and alkylene glycols. Examples of alkylene glycols include ethylene glycol, diethylene glycol, triethylene glycol, propylene glycol, dipropylene glycol, tripropylene glycol, trimethylene glycol, ditrimethylene glycol, tetramethylene glycol, ditetramethylene glycol, and neopentyl glycol. At least one solvent selected from water, ethylene glycol, trimethylene glycol, and tetramethylene glycol is preferable, and water or ethylene glycol is more preferable.

Polyester resin (B) (5)

The content of the aluminum element in the polyester resin (B) is preferably 5 to 50 ppm by mass, and more preferably 7 to 40 ppm by mass, further preferably 10 to 30 ppm by mass, and particularly preferably 15 to 25 ppm by mass. If the content of aluminum element is less than 5 ppm by mass, sufficient polymerization activity is not exhibited in some cases. On the other hand, if the content of aluminum element exceeds 50 ppm by mass, the amount of aluminum-based foreign matter may be increased.

When costs are important, the content of aluminum element in polyester resin (B) is preferably 9 to 20 ppm by mass, more preferably 9 to 19 ppm by mass, more preferably 10 to 17 ppm by mass, and especially preferably 12 to 17 ppm by mass. When the aluminum element is less than 9 ppm by mass, there is a risk that the polymerization activity will not be sufficiently active. On the other hand, if the content exceeds 20 ppm by mass, the amount of aluminum foreign matter may

increase in relation to the content of the phosphorus element described below, and in addition, the cost of the catalyst increases.

The polyester resin (B) may be one type of polyester resin or may be obtained by combining two or more types of polyester resins. In a case where two or more types of polyester resins (B) are used, the content of the above aluminum element may be an average value that falls within the above range. As long as this condition is satisfied, an aluminum element having a content that is outside the above range may be used.

The content of the aluminum element is measured through, for example, a method explained in EXAMPLES described later.

(Phosphorus compound)

The phosphorus compound constituting the polymerization catalyst of the polyester resin (B) is not particularly limited, and phosphonic acid-based compounds and phosphinic acid-based compounds are preferable since the compounds improve catalytic activity highly effectively, and among them, phosphonic acid-based compounds are more preferable since the compounds improve catalytic activity particularly effectively.

Among above phosphorus compounds, preferred is the phosphorus compound having phosphorus element and phenolic structure in the same molecule. The phosphorus compound is not particularly limited as long as the compound has phosphorus element and phenolic structure in the same molecule, and one or two or more of compounds selected from the group consisting of phosphonic acid-based compounds having phosphorus element and phenolic structure in the same molecule and phosphinic acid-based compounds having phosphorus element and phenolic structure in the same molecule are preferable because of its high ability of increasing polymerization activity, and one or two or more types of the phosphonic acid-based compounds having phosphorus element and phenolic structure in the same molecule are more preferable because of its significantly high ability of increasing polymerization activity.

The phosphorus compound having phosphorus element and phenolic structure in the same molecule is exemplified by the compounds with the formulae of $P(=O)R^1(OR^2)(OR^3)$ and $P(=O)R^1R^4(OR^2)$. $R^1$ represents a hydrocarbon group with 1 to 50 carbon atoms having a phenol moiety, or a hydrocarbon group with 1 to 50 carbon atoms having a substituent selected from the group consisting of a hydroxyl group, a halogen group, an alkoxyl group, and an amino group as well as phenolic structure. $R^4$ represents hydrogen, a hydrocarbon group with 1 to 50 carbon atoms, or a hydrocarbon group with 1 to 50 carbon atoms having a substituent selected from the group consisting of a hydroxyl group, a halogen group, an alkoxyl group, and an amino group. $R^2$ and $R^3$ each independently represents hydrogen, a hydrocarbon group with 1 to 50 carbon atoms, or a hydrocarbon group with 1 to 50 carbon atoms having a substituent selected from the group consisting of a hydroxyl group or an alkoxyl group. The hydrocarbon group may have branching structure, alicyclic structure such as cyclohexyl group, or aromatic ring structure such as phenyl group or naphthyl group. The terminals of $R^2$ and $R^4$ may be bonded to each other.

The phosphorus compound having phosphorus element and phenolic structure in the same molecule is exemplified by p-hydroxyphenylphosphonic acid, dimethyl p-hydroxyphenyl phosphonate, diethyl p-hydroxyphenyl phosphonate, diphenyl p-hydroxyphenyl phosphonate, bis(p-hydroxyphenyl)phosphinic acid, methyl bis(p-hydroxyphenyl) phosphinate, phenyl bis(p-hydroxyphenyl) phosphinate, p-hydroxyphenyl phosphinic acid, methyl p-hydroxyphenyl phosphinate, phenyl p-hydroxyphenyl phosphinate.

In addition to the examples described above, the phosphorus compound having phosphorus element and phenolic structure in the same molecule is exemplified by a phosphorus compound having phosphorus element and hindered phenol structure in the same molecule (phenol structure in which at least one alkyl group having a tertiary carbon (preferably alkyl groups having a tertiary carbon in a benzyl position, such as t-butyl group and thexyl group; for example, neopentyl group) is bonded in one or two ortho-positions with respect to a hydroxyl group), preferably a phosphorus compound having phosphorus element and the following structure represented by Chemical Formula A in the same molecule, and more preferably the following dialkyl 3,5-di-tert-butyl-4-hydroxybenzyl phosphonate represented by Chemical Formula B. The phosphorus compound for the production of the polyester resin (B) is preferably the following dialkyl 3,5-di-tert-butyl-4-hydroxybenzyl phosphonate represented by Chemical Formula B, and may additionally contain a modified product of dialkyl 3,5-di-tert-butyl-4-hydroxybenzyl phosphonate. Details of the modified product will be described later.

[Chemical Formula 1]

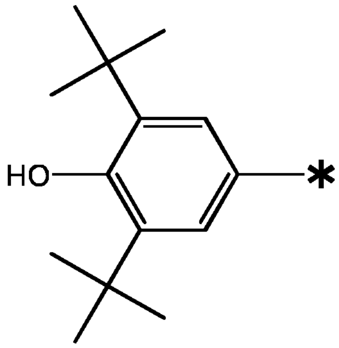

(Chemical Formula A)

(In Chemical Formula A, * represents a point of attachment with the hydrocarbon group comprising $R^1$ of $P(=O)R^1(OR^2)(OR^3)$.)

[Chemical Formula 2]

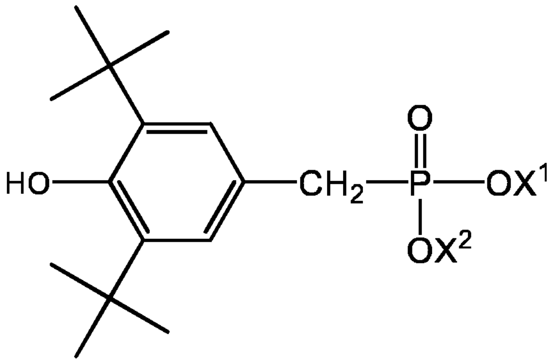

(Chemical Formula B)

(In Chemical Formula B, $X^1$ and $X^2$ each represents hydrogen, or an alkyl group with 1 to 4 carbon atoms.)

In the specification, the polyester resin in which at least one type of hindered phenol structure is detected by a method involving measurement of P-NMR of a solution obtained by dissolving the polyester resin in hexafluoroisopropanol-based solvent refers to a polyester resin "having hindered phenol structure". In other words, the polyester resin (B) is preferably a polyester resin produced with a polymerization catalyst containing a phosphorus compound having phosphorus element and hindered phenol structure in the same molecule. The method (P-NMR detection method) for detecting the hindered phenol structure in the polyester resin (B) is described later.

In chemical Formula B, the number of carbon atoms of the alkyl group as $X^1$ and $X^2$ is preferably 1 to 4 and more preferably 1 to 2. In particular, an ethyl ester compound having two carbon atoms is preferable, since it is commercially available as Irganox1222 (manufactured by BASF) and can easily be acquired.

The phosphorus compound is preferably heat treated in a solvent before use. Details of the heat treatment will be described later. When the phosphorus compound is above dialkyl 3,5-di-tert-butyl-4-hydroxybenzyl phosphonate represented by Chemical Formula B, a part of the dialkyl 3,5-di-tert-butyl-4-hydroxybenzyl phosphonate undergoes a structural change in the heat treatment. For example, at least one of detachment of t-butyl group, hydrolysis of ethyl ester group, and changes to hydroxyethyl ester exchange structure (ester exchange structure with ethylene glycol) occur in some cases. Accordingly, structurally changed phosphorus compounds of dialkyl 3,5-di-tert-butyl-4-hydroxybenzyl phosphonate represented by Chemical Formula B are included in the phosphorus compounds of the present invention. The detachment of t-butyl group occurs significantly under high temperature environment in the polymerization step.

In the following, 9 phosphorus compounds derived from diethyl 3,5-di-tert-butyl-4-hydroxybenzyl phosphonate through partial structural changes are shown as phosphorus compounds. The content of each of the phosphorus compound after structural changes in glycol solution can be quantified by a method involving measurement of P-NMR.

[Chemical Formula 3]

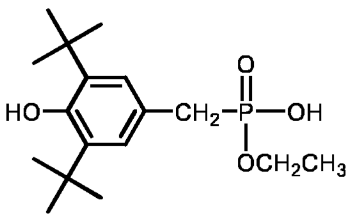
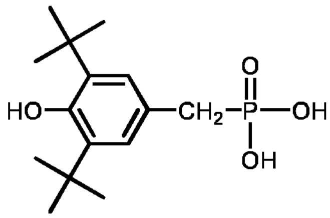
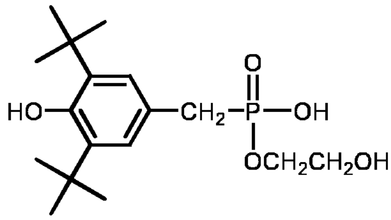
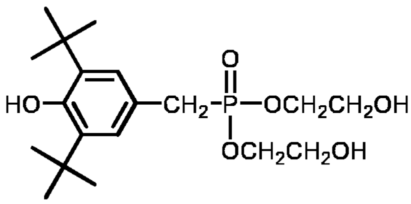
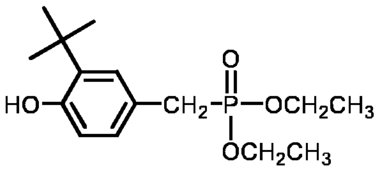
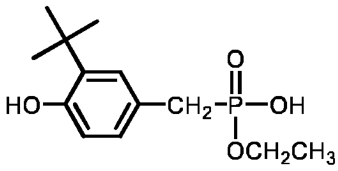
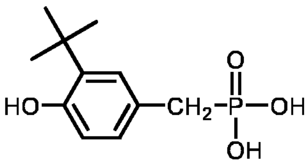
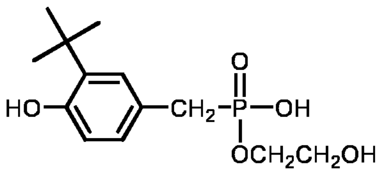
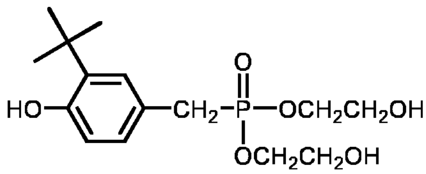

Therefore, as the phosphorus compound in the present invention, modified products of the dialkyl 3,5-di-tert-butyl-4-hydroxybenzyl phosphonate represented by the nine above chemical formulae may be included, in addition to the dialkyl 3,5-di-tert-butyl-4-hydroxybenzyl phosphonate.

When Irganox1222 is used as the phosphorus compound, at least one of 9 types of residues of the phosphorus compounds as shown in the following Table 1 are contained in the polyester resin. When at least one type from 9 types of hindered phenol structure shown in Table 1 is detected by the method involving measurement of P-NMR, the polyester resin (B) is regarded to be a polyester resin produced with a polymerization catalyst containing a phosphorus compound having phosphorus element and hindered phenol structure in the same molecule. The phosphorus compound having hindered phenol structure allows the polymerization catalyst to work with sufficient polymerization activity, and also enables a decrease in catalyst cost.

[Table 1]

| Phenolic structure \ Structure from phosphorus compound | 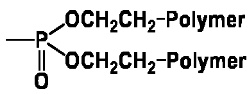 | 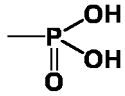 | 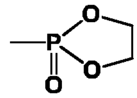 |
|---|---|---|---|
| 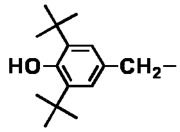 | (Chemical Formula 1) | (Chemical Formula 4) | (Chemical Formula 7) |
| 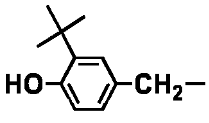 | (Chemical Formula 2) | (Chemical Formula 5) | (Chemical Formula 8) |
| 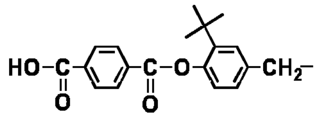 | (Chemical Formula 3) | (Chemical Formula 6) | (Chemical Formula 9) |

In the present invention, the phosphorus compound preferably has at least one type of hindered phenol structure from above structure represented with Chemical Formulae 1, 4, and 7.

Polyester resin (B) (6)

The content of the phosphorus element in the polyester resin (B) is preferably 5 to 1000 ppm by mass, more preferably 10 to 500 ppm by mass, further preferably 15 to 200 ppm by mass, particularly preferably 20 to 100 ppm by mass, and most preferably 30 to 50 ppm by mass. If the content of the phosphorus element is less than 5 ppm by mass, the polymerization activity may decrease or the amounts of aluminum-based foreign matter may increase. On the other hand, if the content of the phosphorus element exceeds 1000 ppm by mass, the polymerization activity may decrease or the addition amount of the phosphorus compound becomes high, and the cost of the catalyst increases.

When costs are more important, the content of the phosphorus element in polyester resin (B) is preferably 13 to 31 ppm by mass, more preferably 15 to 29 ppm by mass, and further preferably 16 to 28 ppm by mass. When the content of the phosphorus element is less than 13 ppm by mass, there is a risk of a decrease in polymerization activity and an increase in the amount of aluminum-based foreign matter. On the other hand, if the content exceeds 31 ppm by mass, there is a risk of a decrease in polymerization activity and an increase in the amount of phosphorus compounds added, resulting in an increase in catalyst cost.

The polyester resin (B) may be one type of polyester resin or may be obtained by combining two or more types of polyester resins. In a case where two or more types of polyester resins (B) are used, the content of the above phosphorus element may be an average value. As long as this condition is satisfied, a phosphorus element having a content that is outside the above range may be used.

The content of the phosphorus element is measured through, for example, a method explained in EXAMPLES described later.

In the polyester resin (B), a molar ratio of the phosphorus element to the aluminum element (hereafter referred to as "residual molar ratio of the phosphorus element to the aluminum element" in order to distinguish the residual molar ratio from the "added molar ratio of the phosphorus element to the aluminum element" as described below) is preferably 1.00 to 5.00, more preferably 1.10 to 4.00, further preferably 1.20 and 3.50, and particularly preferable 1.25 to 3.00. As described above, the aluminum element and the phosphorus element in the polyester resin (B) are originating from the aluminum compound and the phosphorus compound contained in the polymerization catalyst for the polyester resin (B). The use of the aluminum compound along with the phosphorus compound at a specific ratio enables functional formation of a complex having catalytic activity in a polymerization system, thereby allowing the catalyst to work with sufficient polymerization activity. Although the catalyst/production cost of a polyester resin produced with a polymerization catalyst containing an aluminum compound and a phosphorus compound is high compared to a polyester resin produced with a catalyst such as an antimony catalyst, the use of the aluminum compound along with the phosphorus compound at a specific ratio allows a catalyst to work with sufficient polymerization activity with a decrease in catalyst cost. A residual mole ratio of the phosphorus element with respect to the aluminum element of less than 1.00 causes decreases in thermal stability and thermal oxidation stability and an increase in the amount of aluminum-based foreign matter. In contrast, a

residual mole ratio of the phosphorus element to the aluminum element of more than 5.00 indicates that the amount of the phosphorus compound added is too high, resulting in an increase in catalyst cost.

When costs are more important, a residual molar ratio of the phosphorus element to the aluminum element is preferably 1.32 to 1.80, and more preferably 1.38 to 1.68.

The aluminum compound and the phosphorus compound may be used as a polymerization catalyst to produce the polyester resin (B) in combination with another polymerization catalyst such as the antimony compound, the germanium compound, and the titanium compound, to the extent that problems in characteristics, processability, and color tone of the polyester resin (B) are not caused. The polyester resin (B) comprises antimony element at a content of preferably 30 ppm by mass or less, germanium element at a content of preferably 10 ppm by mass or less, and titanium element at a content of preferably 3 ppm by mass or less. However, it is preferable that a minimal amount of such other polymerization catalysts is used, and it is more preferable that the content of other polycondensation catalysts is 0 ppm by mass as much as possible. This does not negate the presence of trace amounts of other polycondensation catalysts due to residual resin in the polyester resin (B) production equipment.

The content of the aluminum element corresponding to the aluminum-based foreign matter in the polyester resin (B) is preferably 3000 ppm by mass or less, more preferably 2800 ppm by mass or less, further preferably 2000 ppm by mass or less, and further more preferably 1500 ppm by mass or less. The aluminum-based foreign matter is generated by the aluminum compound for the polymerization catalyst and is a foreign matter insoluble in the polyester resin (B). The content of the aluminum-based foreign matter exceeding above range may cause quality deterioration of molded body due to fine foreign matters insoluble in the polyester resin (B). In addition, clogging of a filter in filtration of the polyester resin may be increased in polycondensation and molding steps. Although a preferred lower limit of the content of the aluminum element corresponding to the aluminum-based foreign matter is preferably 0 ppm by mass, the lower limit is approximately 300 ppm by mass due to technical difficulties.

In the specification, as is clear from the measurement of aluminum element by a method described later, the content of the aluminum element corresponding to the aluminum-based foreign matter is an index to evaluate a relative amount of the aluminum-based foreign matter based on the amount of the aluminum element, and does not indicate an absolute amount of the aluminum-based foreign matter contained in the polyester resin.

The polyester resin (B) has an intrinsic viscosity of preferably 0.50 to 0.90 dl/g, more preferably 0.55 to 0.80 dl/g, and further preferably 0.58 to 0.75 dl/g. When the intrinsic viscosity of the polyester resin (B) is lower than the lower limit of the above range, a large amount of fine powder might be generated owing to friction between pellets of the polyester resin or friction with a pneumatic transport pipe at the time of pneumatically transporting the polyester resin (B). When the intrinsic viscosity of the polyester resin (B) is higher than the upper limit of the above range, the amount of locally generated shear heat at the time of melting and mixing the polyester resin (B) and the recovered polyester resin (A) might become large so as to degrade the resin, or a stress to be applied during stretching might become high so as to make it difficult to manufacture a film. The intrinsic viscosity of the polyester resin (B) can be adjusted according to the intrinsic viscosity of the polyester resin (A) such that the intrinsic viscosities of the polyesters forming the film fall within the respective appropriate ranges.

In a case where a polyester resin (B) having an intrinsic viscosity of higher than 0.62 dl/g is manufactured through melt polymerization alone, the economic efficiency might decrease. Considering this, in a case where a polyester resin (B) having an intrinsic viscosity of higher than 0.62 dl/g is necessary, the polyester resin (B) obtained through melt polymerization is preferably polymerized through a solid phase polymerization method.

In a case where solid phase polymerization is performed, the CT content of the polyester resin (B) is preferably 7000 ppm by mass or lower, more preferably 6000 ppm by mass or lower, and further preferably 5500 ppm by mass or lower. In actuality, the CT content is preferably 2500 ppm by mass or higher, more preferably 3000 ppm by mass or higher, further preferably 3500 ppm by mass or higher, and even more preferably 4000 ppm by mass or higher.

The polyester resin (B) preferably has an intrinsic viscosity retention rate higher than the intrinsic viscosity retention rate of the polyester resin (A). In the present invention, the intrinsic viscosity retention rate of the entirety of the polyester resin composition is increased by mixing the polyester resin (B) having a high intrinsic viscosity retention rate with a polyester resin (A) having a low intrinsic viscosity retention rate.

The polyester resin (B) has an intrinsic viscosity retention rate of preferably 93% or higher, more preferably 94% or higher, and further preferably 95% or higher. When the intrinsic viscosity retention rate of the polyester resin (B) is lower than 93%, the intrinsic viscosity retention rate of a polyester resin composition (C) may become low, and the recyclability may become insufficient. The upper limit for the intrinsic viscosity retention rate of the polyester resin (B) is preferably 100% and is about 99% owing to technical difficulties.

The intrinsic viscosity retention rate of the above polyester resin (B) means the intrinsic viscosity retention rate of a sample having been subjected to one time of re-kneading and can be measured as described later.

A manufacturing method for the polyester resin (B) will be described later.

The polyester resin (B) is preferably formed into pellets in which the longest distance between two points is preferably 2 to 10 mm and further preferably 3 to 6 mm. Examples of the shapes of the pellets include spherical shapes,

ellipsoidal shapes, straw rice bag-like shapes, cubic shapes, and the like.

The polyester resin (B) may be a resin formed into pellets after polymerization, or may be an article recovered during a process for molding goods by using the polyester resin (B). Examples of the article recovered during the process include: products that are imperfect articles and thus have not been shipped to the market; edge portions gripped during film stretching; offcuts obtained in formation of a slit; molded articles returned as a result of complaints or the like; and the like. In the case of any of these articles recovered during the process, the polyester resin (B) is preferably a pulverized substance similar to the polyester resin (A).

The polyester resin (B) may be used as a masterbatch (concentrated resin) of an additive in the same manner as a polyester resin (D) described later.

[Polyester Resin Composition (C)]

In the present invention, the polyester resin (A) and the polyester resin (B) are mixed to manufacture a film. The mixture of the polyester resin (A) and the polyester resin (B) is referred to as "polyester resin composition (C)". In manufacturing a film, the polyester resin (A) and the polyester resin (B) may be supplied into separate inlets of an extruder, may be supplied into a same inlet of the extruder, or may be dry-blended in advance before the supplying. From the viewpoint of handleability, a step of mixing the polyester resin (A) and the polyester resin (B) preferably includes melting and mixing the polyester resin (A) and the polyester resin (B), to prepare a polyester resin composition (C). The polyester resin composition (C) is preferably used for manufacturing a film.

The polyester resin composition (C) is preferably produced by mixing the polyester resin (A) and the polyester resin (B) in a mass ratio of from 5 : 95 to 95 : 5. That is, in the polyester resin composition (C), an amount of the polyester resin (A) with respect to 100 parts by mass of a total amount of the polyester resin (A) and the polyester resin (B) is preferably from 5 to 95 parts by mass. Controlling of the amount of the polyester resin (A) to above range may prevent coloring and a decrease in molecular weight of the polyester resin composition (C). In the specification, the prevention of coloring of the polyester resin means that a decrease in L-value and an increase in b-value of the polyester resin composition are prevented even after several times of recycling i.e., re-kneading. When the blend ratio of the polyester resin (A) is more than 95 parts by mass, the intrinsic viscosity retention rate of the polyester resin composition (C) may become low, resulting in insufficient recyclability. In contrast, when the blend ratio of the polyester resin (A) is less than 5 parts by mass, prevention effect of coloring may be saturated, and economic efficiency may be decreased. Even though a residual mole ratio of the phosphorus element to the aluminum element controlled to above range, the polyester resin (B) is produced with the polymerization catalyst containing an aluminum compound and a phosphorus compound, therefore, catalyst cost, i.e., production cost is high compared that in production of polyester resins with a catalyst of, for example, an antimony catalyst. However, a combination of the polyester resin (A) and the polyester resin (B) enables an increase in recyclability with a decrease in production cost. The polyester resin (A) blended in higher ratio can contribute to reduction in the production cost of the polyester resin composition (C), however, the color tone of the polyester resin composition is more likely to be decreased as the number of recycling cycles increase. In contrast, the polyester resin (B) blended in higher ratio can contribute to reduction in deterioration in color tone of the polyester resin composition (C) even after several times of recycling, however, the production cost may be increased. The mass ratio between the polyester resin (A) and the polyester resin (B) is more preferably from 20 : 80 to 80 : 20 and further preferably from 25 : 75 to 75 : 25.

The polyester resin composition (C) can be produced by dry blending the polyester resin (A) and the polyester resin (B). Alternatively, the polyester resin (A) and the polyester resin (B) can be kneaded by a method of melt-extrusion, to produce the polyester resin composition (C). In this case, the polyester resin (A) and the polyester resin (B) are dry blended at first, and then the polyester resin composition (C) can be produced by melting and kneading the blended resins with a general kneading apparatus of resins such as banbury mixer, kneader, single-screw extruder, twin-screw extruder, four-screw extruder, and single-screw planetary extruder.

Among them, twin-screw extruder, four-screw extruder, and single-screw planetary extruder are preferable due to activated surface renewal. The extruder preferably has a vent port of at least one, preferably 2 or more, and further preferably 3 or more. In a preferred embodiment, the vent port is connected to a decompression system to prevent degradation of the polyester resin composition (C).

Alternatively, the polyester resin composition (C) may be formed by: adding the polyester resin (A) to the polyester resin (B) which is in a state of being melted before being cooled and formed into pellets after polymerization of the polyester resin (B); and kneading the resulting mixture.

The polyester resin composition (C) may be formed into a film while still being in a melted state and is preferably formed into pellets in advance. The shapes of the pellets are the same as those of the pellets of the polyester resin (B).

The polyester resin composition (C) has an intrinsic viscosity of preferably 0.50 to 0.90 dl/g, more preferably 0.55 to 0.80 dl/g, and further preferably 0.58 to 0.75 dl/g. When the intrinsic viscosity of the polyester resin composition (C) is lower than the lower limit of the above range, the mechanical strength and the impact resistance of the manufactured polyester film might become insufficient. When the intrinsic viscosity of the polyester resin composition (C) is higher than

the upper limit of the above range, the economic efficiency might decrease, the amount of locally generated shear heat at the time of melting with the extruder might become large so as to degrade the resin, or a stress to be applied during stretching might become high so as to make it difficult to manufacture a film.

The polyester resin composition (C) has an intrinsic viscosity retention rate of preferably 89% or higher, more preferably 90% or higher, further preferably 92% or higher, particularly preferably 93% or higher, and most preferably 94% or higher. When the intrinsic viscosity retention rate of the polyester resin composition (C) is lower than 89%, the recycling efficiency might become insufficient. The upper limit for the intrinsic viscosity retention rate of the polyester resin composition (C) is preferably 100% and is about 99% owing to technical difficulties. Also, the intrinsic viscosity retention rate of the polyester resin composition (C) is preferably higher than the intrinsic viscosity retention rate of the polyester resin (A). In the specification, when there is simply the wording "intrinsic viscosity retention rate", the wording refers to the intrinsic viscosity retention rate of a re-kneaded article having been subjected to only one time of re-kneading.

That is, the intrinsic viscosity retention rates of the polyester resin (A), the polyester resin (B), the polyester resin (C), a polyester resin (D), and a polyester resin composition (E) can be measured as described as follows.

Intrinsic viscosity retention rate (%) = intrinsic viscosity of sample having been subjected to one time of re-kneading (intrinsic viscosity of once re-kneaded sample)/intrinsic viscosity of sample $\times$ 100

(The once re-kneaded sample is a sample subjected to a twin-screw extruder at a temperature of 260°C, screw speed of 200 rpm, and discharge rate of 1.7 to 2.0 kg/h. The intrinsic viscosity is calculated by subjecting a solution of 0.2 g of the sample and 20 ml of a mixture of 1,1,2,2-tetrachloroethane and p-chlorophenol (mass ratio 1:3) to an Ubbelohde viscometer at 30°C.)

The amount of a CT contained in a re-kneaded article obtained by re-kneading the polyester resin composition (C) one time is also preferably 6600 ppm by mass or lower, more preferably 6400 ppm by mass or lower, and further preferably 6000 ppm by mass or lower. The lower limit for said amount is not limited, but, in consideration of technical difficulties, is about 2500 ppm by mass and preferably 3000 ppm by mass or higher. An amount of the CT higher than 6600 ppm by mass leads to increase in the amount of the CT appearing on a surface of the film so as to increase the haze or leads to other inconveniences, and thus is not preferable depending on use. Furthermore, the amount higher than 6600 ppm by mass raises concerns such as a concern that a film production device is stained with the CT so that the number of times of cleaning needs to be increased. Methods for setting the amount of the CT in the polyester resin composition (C) to be the above value or smaller include methods such as: a method that includes using a polyester resin composition (C) in which the amount of the CT in the polyester resin (A) is small; a method that includes decreasing the amount of the CT in the polyester resin (B); and a method that includes decreasing the amount of the CT in the polyester resin composition (C). Examples of the method that includes decreasing the amount of the CT in the polyester resin (B) or the polyester resin composition (C) include methods such as: a method that includes performing solid phase polymerization; and a method that includes performing heat treatment at 190 to 220°C in a sealed container or in an ethylene glycol-containing air stream.

In the subtraction of the CT amount of the polyester resin composition obtained by one time of re-kneading of the polyester resin composition (C) from the CT amount of the polyester resin composition obtained by three times of re-kneading of the polyester resin composition (C) (hereinafter, an obtained value is referred to as $\Delta$CT), the $\Delta$CT is preferably 900 ppm or less. The $\Delta$CT is more preferably 700 ppm or less, and further preferably 600 ppm or less. Although the lower limit of $\Delta$CT is preferably 0 ppm, the lower limit is approximately 200 ppm due to technical difficulties. The $\Delta$CT of more than 900 ppm may cause increase in the amount of the CT appearing on a surface of the film.

When the polyester resin composition (C) comprises the polyester resin (B) produced with the phosphorus compound available as above Irganox1222, P-NMR measurement of the polyester resin composition (C) detects at least one of nine types of hindered phenol structure shown in Table 1. When a phosphorus compound having phosphorus element and hindered phenol structure in the same molecule is used as a polymerization catalyst other than Irganox1222, hindered phenol structure is detected similarly as above.

[Polyester Resin (D)]

A mode in which a polyester film is manufactured by adding a polyester resin (D) different from the polyester resin (A) and the polyester resin (B) is also a preferable mode for manufacturing a film in the present invention.

That is, the step of mixing the polyester resin (A) and the polyester resin (B) may include further mixing the polyester resin (D) different from the polyester resin (A) and the polyester resin (B).

The polyester resin (D) preferably differs from the polyester resin (A) and the polyester resin (B) in terms of one or more of a constituent component, a constituent component amount, a catalyst, the intrinsic viscosity, the amount of a CT, an additive, and the like.

The polyester resin (D) may have any of various compositions according to the film to be manufactured.

In one example, in the case of manufacturing a polyethylene terephthalate film, the polyester resin (D) contains

copolymerization components other than a terephthalic acid component and an ethylene glycol component, the total amount of the copolymerization components being preferably 10 mol% or lower, more preferably 7 mol% or lower, and particularly preferably 5 mol% or lower.

In another example, in the case of manufacturing a polyester-based heat shrinkable film, the polyester resin (D) is preferably a resin other than a copolymerized polyester or polyethylene terephthalate such that the resin comes to have a composition of a final heat shrinkable film together with the polyester resin (A) and the polyester resin (B).

In still another example, in the case of manufacturing a void-containing polyester film, the polyester resin (D) may be a polyester obtained by copolymerizing polyethylene glycol, polytetramethylene glycol, or the like.

A dicarboxylic acid component and a glycol component used for the polyester resin (D) are the same as those presented as examples in relation to the polyester resin (B).

The polyester resin (D) has an intrinsic viscosity of preferably 0.50 to 0.90 dl/g, more preferably 0.55 to 0.80 dl/g, and further preferably 0.58 to 0.75 dl/g although the appropriate range of said intrinsic viscosity varies according to the film to be manufactured.

A catalyst used for the polyester resin (D) is preferably any of those presented as examples in relation to the polyester resin (A).

The polyester resin (D) has an intrinsic viscosity retention rate that may be 92% or lower or 91% or lower, and furthermore, may be 90% or lower or particularly 89% or lower although the intrinsic viscosity retention rate is preferably high. The intrinsic viscosity retention rate of the polyester resin (D) can be increased through a method that includes: decreasing the amount of the catalyst; deactivating the catalyst; adding a degradation inhibitor such as a heat stabilizer; or the like. The lower limit for the intrinsic viscosity retention rate of the polyester resin (D) is preferably equal to that of the polyester resin (A).

In manufacturing a film, a colorant, lubricant particles, an ultraviolet absorber, a melt specific resistance adjusting agent, an antistatic agent, an antioxidant, a heat stabilizer, and the like are added in many cases, and the polyester resin (D) may be a masterbatch (concentrated resin) of these additives. Examples of the lubricant particles include: inorganic particles of silica, calcium carbonate, talc, kaolin, and the like; and organic particles of crosslinked styrene, crosslinked acrylic resins, melamine resins, and the like. The lubricant particles have a particle diameter of preferably 10 nm to 5 μm and more preferably 50 nm to 3 μm. The particle diameter can be obtained through a Coulter counter method. Examples of the melt specific resistance adjusting agent include a combination of a metal compound of calcium, magnesium, potassium, or the like and a phosphorus compound.

One or more types of polyester resins (D) may be used.

The content of the polyester resin (D) is preferably 5 to 95 parts by mass, more preferably 90 parts by mass or smaller, further preferably 80 parts by mass or smaller, even more preferably 70 parts by mass or smaller, particularly preferably 60 parts by mass or smaller, and most preferably 50 parts by mass or smaller with respect to 100 parts by mass of the total amount of the polyester resin (A), the polyester resin (B), and the polyester resin (D). When the content is higher than the above value, the recycling efficiency with a recovered polyester resin may decrease.

[Polyester Resin Composition (E)]

The polyester film is obtained by: melting and mixing, as polyester resins which are raw materials, the polyester resin (A) and the polyester resin (B), or the polyester resin composition (C), and furthermore, the polyester resin (D) as necessary; and forming the resultant mixture into a film according to a usual method.

One embodiment of a method for producing a polyester film according to the present invention includes a step of mixing: a polyester resin composition (C) which is a melt mixture of a recovered polyester resin (A) and a polyester resin (B) containing an aluminum compound and a phosphorus compound; and a polyester resin (D) different from the polyester resin (A) and the polyester resin (B).

A polyester resin that forms the film and that is obtained as described above is defined as a polyester resin composition (E). In the case of a polyester film having a multilayer structure described later, a polyester resin forming a layer containing the polyester resin (A) and the polyester resin (B) is defined as a polyester resin composition (E).

In a case where the polyester resin (D) is not used, the polyester resin composition (C) serves as the polyester resin composition (E). The composition and the intrinsic viscosity of the polyester resin composition (E) are the same as those described in relation to the polyester resin (D).

At least one polyester resin (preferably the polyester resin (A) and the polyester resin (B)) contained in the polyester resin composition (E) forming the film preferably contains the constituent unit of isophthalic acid as a copolymerization component.

When the total amount of all the constituent units of the polyvalent carboxylic acid components is defined as 100 mol%, the lower limit for the content of the constituent unit of the isophthalic acid in the polyester resin composition (E) is preferably 0.02 mol%, more preferably 0.05 mol%, further preferably 0.1 mol%, particularly preferably 0.2 mol%, and most preferably 0.3 mol%. The upper limit for the content is preferably 5.0 mol%, more preferably 4.0 mol%, further preferably

3.0 mol%, particularly preferably 2.5 mol%, and most preferably 2.0 mol%.

The polyester resin composition (E) forming the film preferably contains at least antimony element, germanium element, phosphorus element, and aluminum element.

The content of the antimony element in the polyester resin composition (E) is preferably 10 ppm by mass or higher, more preferably 15 ppm by mass or higher, and further preferably 20 ppm by mass or higher. The content of the antimony element in the polyester resin composition (E) is preferably 250 ppm by mass or lower, more preferably 200 ppm by mass or lower, and further preferably 180 ppm by mass or lower. When the content is set to fall within the above range, it is possible to obtain a film that is hardly degraded and that has a high transparency and a low haze, while ensuring economic efficiency.

The content of the germanium element in the polyester resin composition (E) is preferably 0.1 ppm by mass or higher, more preferably 0.15 ppm by mass or higher, and further preferably 0.20 ppm by mass or higher. The content of the germanium element in the polyester resin composition (E) is preferably 5 ppm by mass or lower, more preferably 4 ppm by mass or lower, and further preferably 3 ppm by mass or lower. When said content is set to fall within the above range, it is possible to obtain a film that is hardly degraded, while ensuring economic efficiency.

The content of the aluminum element in the polyester resin composition (E) is preferably 1 ppm by mass or higher and 20 ppm by mass or lower and is more preferably 3 ppm by mass or higher and 20 ppm by mass or lower and further preferably 5 ppm by mass or higher and 20 ppm by mass or lower from the viewpoint of further suppressing decrease in coloring and further increasing the intrinsic viscosity retention rate. The content of the aluminum element in the polyester resin composition (E) may be 17 ppm by mass or lower or 15 ppm by mass or lower. When the content is set to fall within the above range, it is possible to obtain a film that is hardly degraded, while ensuring economic efficiency.

The amount of the CT in the polyester resin composition (E) is preferably 6600 ppm by mass or lower and more preferably 6400 ppm by mass or lower, and may be 6000 ppm by mass or lower. The amount of the CT in the polyester resin composition (E) is preferably 3000 ppm by mass or higher and more preferably 4000 ppm by mass or higher.

The content ratio of the antimony element to the aluminum element in the polyester resin composition (E) (the content ratio of the antimony element/the aluminum element) is, on a mass basis, preferably from 0.5 to 200, more preferably from 0.7 to 190, and further preferably from 0.9 to 180.

The content ratio of the antimony element/the aluminum element may be from 5 to 170, 18 to 150, or 10 to 130. When the content ratio is set to fall within the above range, it is possible to obtain a film that is hardly degraded and that has a high transparency and a low haze, while ensuring economic efficiency.

From the viewpoint of further suppressing decrease in coloring and further increasing the intrinsic viscosity retention rate, the content ratio of the antimony element/the aluminum element is even more preferably 1 to 100 or 80 or lower, particularly preferably 1 to 50, and most preferably 1 to 30.

The ratio of the amount of the antimony element to the amount of the aluminum element and the phosphorus element (preferably the phosphorus element derived from the polyester resin (B)) in the polyester resin composition (E) (the content ratio of the antimony element/(the aluminum element and the phosphorus element (preferably the phosphorus element derived from the polyester resin (B)))) is, on a mass basis, preferably from 0.1 to 100, more preferably from 0.15 to 90, further preferably from 0.2 to 80, and even more preferably from 0.25 to 70. When the content ratio is set to fall within the above range, it is possible to obtain a film that is hardly degraded and that has a high transparency and a low haze, while ensuring economic efficiency.

From the viewpoint of further suppressing decrease in coloring and further increasing the intrinsic viscosity retention rate, the content ratio of the antimony element/(the aluminum element and the phosphorus element (preferably the phosphorus element derived from the polyester resin (B))) is even more preferably from 0.2 to 50 or 25 or lower, particularly preferably from 0.3 to 20, and most preferably from 0.3 to 15.

The polyester resin composition (E) has an intrinsic viscosity retention rate that is preferably 89% or higher and more preferably 90% or higher and may be 91% or higher, 92% or higher, or 93% or higher. The intrinsic viscosity retention rate of the polyester resin composition (E) is preferably 100% and is, in actuality, preferably 99% or lower and more preferably 98% or lower.

A measurement method for the intrinsic viscosity retention rate of the above polyester resin composition (E) is as described above.

Various characteristics of the polyester resin composition (E) are the same as those described in relation to the polyester resin composition (C).

The film may, according to use thereof and characteristics required therefor, contain various additives other than the polyester resins. As the additives, resins such as polyamide, polyimide, polycarbonate, polyurethane, polyether, polyphenylene sulfide, polyphenylene sulfide, polyetherimide, and polyphenylene oxide may be added in addition to the various additives presented as examples in relation to the polyester resin (D). In the case of a void-containing polyester film, a void forming agent such as polystyrene or a polyolefin may be added. The addition amount of these resins other than the polyesters is preferably 1 to 30% by mass and more preferably 2 to 20% by mass with respect to the total amount of the polyester resin composition (E) and the resins other than the polyester resin composition (E).

[Polyester Film]

The polyester film according to the present invention is formed from the polyester resin composition (E) containing the recovered polyester resin (A) and the polyester resin (B) containing the aluminum compound and the phosphorus compound.

In the case of an unstretched film, the polyester film only has to be obtained by performing melt-kneading with an extruder and then performing extrusion from a die onto a cooling roll into the shape of a thin film. Alternatively, the film may be obtained through calendaring.

In the case of a stretched film, the unstretched film obtained as described above only has to be stretched in a length direction or a width direction, to be formed into a uniaxially stretched or biaxially stretched polyester film.

The stretching can be performed through, for example, a method that includes stretching the unstretched film between rolls having different circumferential speeds in the case of stretching the unstretched film in the length direction. The stretching in the width direction can be performed by, for example: gripping both ends in the width direction of the film by movable clips or the like; guiding the gripped film to a tenter; and widening the movement rail width between the clips so as to stretch the film. In the case of sequential biaxial stretching, stretching in either direction may be performed first, but, in general, stretching in the length direction is performed first in many cases. Alternatively, stretching in the length direction and stretching in the width direction may be performed simultaneously or according to an arbitrarily determined sequence by using a simultaneous biaxial stretching machine. The stretching may be performed in multiple stages, and, in the case of performing the stretching in multiple stages, stretching in the length direction and stretching in the width direction may be performed alternately.

The stretching is preferably performed at a temperature within a range from the glass transition temperature (Tg) of the polyester resin composition (E)+5°C to Tg+70°C and is further preferably performed at a temperature within a range from Tg+10°C to Tg+60°C. The stretching is preferably performed in at least one direction at a stretching ratio of preferably 10 times or lower, more preferably 8 times or lower, and further preferably 6 times or lower. In order to provide an intense orientation, the stretching ratio is preferably 2 times or higher, further preferably 2.5 times or higher, and particularly preferably 2.8 times or higher. In order to obtain a highly uniaxial film even in the case of biaxial stretching, a stretching ratio in a direction orthogonal to a main stretching direction may be the aforementioned stretching ratio or lower.

After the stretching, the polyester film is preferably heat-set at a temperature not higher than the crystal melting point (mp) of the polyester resin composition (E). The heat-setting temperature is preferably mp-10°C or lower and more preferably mp-20°C or lower. In general, the lower limit for the heat-setting temperature is preferably 100°C or higher and more preferably 130°C or higher although the lower limit is dependent on the composition of the polyester resin composition (E) or the heat resistance desired to be imparted to the film. For example, in a case where the polyester resin composition (E) is for a polyethylene terephthalate film, the heat-setting temperature is preferably 170 to 250°C and more preferably 180 to 240°C.

The heat-setting is preferably performed while the stretching ratio is maintained. However, in order to decrease thermal shrinkage of the polyester film, the polyester film may be, during a period after the heat-setting and before cooling, subjected to a relaxation step in which the polyester film may be shrunk by about 1 to 5% from the stretched state. The temperature in the relaxation step is preferably 100°C to the heat-setting temperature-5°C and more preferably 120°C to the heat-setting temperature-10°C. The polyester film more preferably has a relaxation rate of 1.5 to 4%.

The polyester film may be a single-layer polyester film or may be a multilayer polyester film composed of at least two layers. In the case of a multilayer polyester film, at least one of the layers needs to be formed from the polyester resin composition (E). A plurality of the layers or all of the layers may each be formed from the polyester resin composition (E), and in this case, the compositions of and the ratio among the polyester resin (A), the polyester resin (B), and the polyester resin (D) may differ among the layers. Also, in the case of a multilayer polyester film, at least one of the layers may be a layer that does not contain the polyester resin (A).

Furthermore, in the case of a multilayer polyester film, it is preferable to obtain a configuration having three or more layers such that: an intermediate layer is a layer formed from the polyester resin composition (E); and neither of the outermost layers contains the recovered polyester resin (A).

In the case of the multilayer polyester film, the layer formed from the polyester resin composition (E) has a thickness of preferably 30% or higher, more preferably 50% or higher, further preferably 60% or higher, and particularly preferably 70% or higher of the thickness of the entirety of the film. In a case where the thickness is smaller than the above value, the recycling efficiency with which the recovered polyester resin (A) is used may become low.

The polyester film has a thickness of preferably 1 to 2000 μm and more preferably 2 to 1000 μm. The thickness can be set to fall within an appropriate range according to use. For example, a representative thickness in the case of optical use is 20 to 150 μm, a representative thickness in the case of a transfer or release film is 10 to 100 μm, a representative thickness in the case of a general wrapping film is 5 to 50 μm, and a representative thickness in the case of a thick object such as a tray is 200 to 1000 μm.

<Surface Treatment for Polyester Film>

The polyester film is preferably subjected to surface treatment in order to increase the property of close contact with an adhesive, a coating material, ink, or the like. Examples of the surface treatment include corona treatment, plasma treatment, flame treatment, and the like.

The polyester film may be provided with an easily-adhesive layer.

As a resin for the easily-adhesive layer, a polyester resin, a polyurethane resin, a polycarbonate resin, an acrylic resin, or the like is used, and a polyester resin, a polyester-polyurethane resin, a polycarbonate-polyurethane resin, or an acrylic resin is preferable. The easily-adhesive layer is preferably crosslinked. Examples of a crosslinking agent for the crosslinking include isocyanate compounds, melamine compounds, epoxy resins, oxazoline compounds, and the like. Addition of a watersoluble resin such as polyvinyl alcohol is also a useful means for improving the property of close contact with a polarizer.

The easily-adhesive layer can be provided by being applied to and dried on the polyester film as an aqueous coating material obtained by adding, as necessary, the crosslinking agent, particles, or the like to any of these resins. Examples of the particles include particles used for the above base material.

The easily-adhesive layer may be provided off-line with respect to the film having been stretched, but is preferably provided in-line during the film production process. In the case of providing the easily-adhesive layer in-line, the provision may occur before longitudinal stretching or before transverse stretching, but it is preferable that, immediately before transverse stretching, the easily-adhesive layer is coated on the film, and is then dried and crosslinked in a preheating, heating, and heat treatment step performed with a tenter. In a case where in-line coating is performed immediately before longitudinal stretching with rolls, the film is preferably guided to a stretching roll after the easily-adhesive layer is dried with a vertical dryer subsequently to the coating.

The coating amount of the easily-adhesive layer is preferably 0.01 to 1.0 $g/m^2$ and more preferably 0.03 to 0.5 $g/m^2$.

The polyester film manufactured according to the present invention can be utilized for various applications without limitation. Examples of the applications include: base material films for prisms or lens sheets; hard coat films; electrode base material films for touch panels; anti-scattering films; antireflective films; polarizer protective films; polarizing plate protective films; surface protective films for display devices, circuits, and the like; release films for ceramic green sheets and the like; polarizing plate release films; transfer films; in-mold transfer films; in-mold molding films; barrier films on which aluminum or an inorganic oxide has been vapor-deposited; solar cell back sheets; base material films for circuits; base material films for flat cables; base material films for magnetic recording media; ink ribbons; image-receiving films; films for labels, tags, and cards; films for packaging bags; heat shrinkable films; trays; cover tape; and the like.

According to each of the applications, an additive may be added into the film, or post-treatment may be performed such that the film has a function.

[Method for producing polyester resin (B)]

Next, a method for producing the polyester resin (B) will be described. The polyester resin (B) can be produced by a method comprising conventional steps except that the polyester polymerization catalyst containing an aluminum compound and a phosphorus compound is used for producing polyester in the present invention. In addition, the polymerization catalyst is preferably added in a manner satisfying the following (5) and (6), and more preferably in a manner further satisfying the following (7) in addition to the following (5) and (6). Preferred numerical ranges of the following (5) to (7) are described above:

(5) the polyester resin (B) comprises aluminum element at a content of from 5 to 50 ppm by mass,
(6) the polyester resin (B) comprises phosphorus element at a content of from 5 to 1000 ppm by mass, and
(7) the polyester resin (B) comprises the aluminum element and the phosphorus element at a residual mole ratio of the phosphorus element with respect to the aluminum element of 1.00 or more and 5.00 or less.

The method for producing the polyester resin (B) preferably includes: a first step of synthesizing, as an intermediate, a polyester which is a polycondensation substance (low-order condensate) or an oligomer of the polyester; and a second step of further performing polycondensation of the intermediate. In a case where the polyester resin (B) contains only the chemically recycled BHET, or in a case where the amount of the copolymerization component is small, the method may be started from the second step by omitting the first step. However, in the case where the amount of the copolymerization component is small, it is preferable that: the copolymerization component is added to the chemically recycled BHET; or, after a first step of synthesizing an oligomer by using the copolymerization component, and as necessary, terephthalic acid or ethylene glycol, the obtained oligomer and the chemically recycled BHET are mixed, and

polymerization is performed.

Also, a solution 'S' obtained by dissolving an aluminum compound and a solution 'T' obtained by dissolving a phosphorus compound are preferably added to the intermediate after the first step and before the second step in a manner satisfying the following (8) to (10). The polycarboxylic acid and ester-forming derivative thereof, the hydroxycarboxylic acid allowed to be added in small amount and the ester-forming derivative thereof, and the cyclic ester allowed to be added in small amount are not distill off from the reaction system in the polymerization step to produce the polyester resin (B), and all the use amount of the catalyst initially added to the system remains in the obtained polyester resin (B); hence, the mass of the polyester produced can be calculated from the amount of the above monomers:

(8) the amount of the aluminum element added with respect to the polyester resin (B) produced is from 5 to 50 ppm by mass, more preferably 7 to 40 ppm by mass, further preferably 10 to 30 ppm by mass, and particularly preferably 15 to 25 ppm by mass,

(9) the amount of the phosphorus element added with respect to the polyester resin (B) produced is from 5 to 1500 ppm by mass, more preferably 10 to 500 ppm by mass, further preferably 20 to 200 ppm by mass, and particularly preferably 30 to 100 ppm by mass, and

(10) the mole ratio of the addition amount (9) of the phosphorus element with respect to the addition amount (8) of the aluminum element (hereinafter may be referred to as 'addition mole ratio of the phosphorus element with respect to the aluminum element') is 1.00 or more and 7.00 or less, more preferably 1.50 or more and 6.00 or less, and further preferably 2.00 or more and 5.00 or less.

The method for producing the polyester which is the low-order condensate (low polymer) or the oligomer synthesized in the first step is not particularly limited.

The polyester resin (B) can be produced by a method including conventional steps except that a polyester polymerization catalyst containing an aluminum compound and a phosphorus compound is used and the amount of the polyester polymerization catalyst is taken into consideration. For example, polyethylene terephthalate can be produced by a method in which chemically recycled BHET and other copolymerization components, if needed, are reacted directly to be esterified while water is distilled off from the system, polycondensation is subsequently carried out under normal or reduced pressure. Further, solid-phase polymerization may be conducted to increase an intrinsic viscosity, if needed. The amount (mass) of the polyester resin (B) produced can be calculated from the amount (mass) of polycarboxylic acids including dicarboxylic acids as raw materials.

In either of these methods, the esterification or ester exchange reaction may be conducted in one or multiple stages.

The polyester resin produced by melt polymerization can be additionally polymerized by solid-phase polymerization method. The solid-phase polymerization can be conducted with a continuous reactor similarly as melt polymerization.

When continuous polycondensation apparatus include three or more reactors (i.e., three-stage polymerization method including an initial stage, an intermediate stage, and a late stage), the first stage is defined as the initial stage, the final stage is defined as the late stage, and stages from the second stage to the stage before the final stage are defined as the intermediate stage of the polycondensation reaction. Preferably, the reaction proceeds in the intermediate stage under polymerization reaction conditions are controlled to intermediate conditions between the initial stage and the final stage. Preferably, the degrees of increases in intrinsic viscosities in each stage are smoothly distributed.

(Solid phase polymerization method)

In order to increase intrinsic viscosity, a polyester resin produced by melt polymerization method may be subjected to solid phase polymerization. The solid phase polymerization may be a batch type polymerization method or a continuous polymerization method, but the solid phase polymerization is preferably carried out with a continuous device similarly as melt polymerization.

The polyester resin produced by melt-polymerization is additionally polymerized preferably by solid-phase polymerization method in order to decrease CT amount in the polyester resin (B). The polyester obtained in the second step (melt-polymerization) is powdered and granulated and then subjected to solid-phase polymerization. The powdered and granulated polyester is in the shape of chips, pellets, flakes, or powder, and chips and pellets are preferable among them.

The solid-phase polymerization may be conducted by heating powdered and granulated polyester at a temperature not exceeding the melting point of the polyester, under circulation of an inert gas or under reduced pressure. The solid-phase polymerization may be conducted in one stage or in multiple stages.

The powdered and granulated polyester to be subjected to solid-phase polymerization step may be pre-crystallized by heating at a temperature lower than the temperature at which solid-phase polymerization is conducted

first, and then the polyester may be subjected to solid-phase polymerization.

The pre-crystallization step may be conducted by heating the powdered and granulated polyester in a dried state, normally at a temperature of from 120 to 200°C, preferably 130 to 180°C, for 1 minute to 4 hours. Alternatively, the pre-crystallization step may be conducted by heating the powdered and granulated polyester in an atmosphere of water vapor, an inert gas containing water vapor, or air atmosphere containing water vapor, normally at a temperature of from 120 to 200°C for 1 minute or more.

The polyester obtained by melt polymerization as described above is then, for example, chipped and transported from pipes to a storage silo or solid-phase polymerization step. When the chips are transported, for example, by forced low-density transportation method using air, large impact force is applied on the surface of the melt-polymerized polyester chips due to collision with piping, causing large amounts of fine particles and film-form materials. These fine particles and film-form materials can promote crystallization of polyesters. When large amounts of fine particles and film-form materials exist, a molded body may be produced with significantly decreased transparency. Accordingly, in one preferred embodiment, a step for removing the fine particles and the film-form materials is included.

The method for removing the fine particles and the film-form materials is not particularly limited. The fine particles and the film-form materials may be removed, for example, by a method including a vibration sealing step, an air stream classification step by air stream, or a gravitation classification step, which are separately provided during the intermediate step between the solid phase polymerization step and a step provided after the solid phase polymerization step.

When the catalyst containing the aluminum compound and the phosphorus compound is used, the catalyst may be added in the form of preferably a slurry or a solution, more preferably a solution obtained by dissolving the catalyst in a solvent such as water or glycol, further preferably a solution obtained by dissolving the catalyst in a solvent of water and/or glycol, and most preferably a solution obtained by dissolving the catalyst in ethylene glycol.

The solution 'S' obtained by dissolving the aluminum compound and the solution 'T' obtained by dissolving the phosphorus compound are preferably added in any step before the start of polymerization reaction in the production process of the polyester resin (B), and the solutions are added in a manner such that the contents (residual amount) of the aluminum element and the phosphorous element in the polyester resin (B) satisfy the ranges specified by above (4) to (6).

By adding the solution 'S' obtained by dissolving the aluminum compound and the solution 'T' obtained by dissolving the phosphorus compound in the amounts that allows the aluminum element and the phosphorous element contents (residual amount) in the polyester resin (B) to satisfy ranges specified by above (4) to (6), a complex having catalytic activity is formed functionally in the polymerization system, and the catalyst can work with sufficient polymerization activity. In addition, the generation of the aluminum-based foreign matter can be prevented.

All the use amount of aluminum element initially added as a catalyst in the system remains in the polyester resin (B) produced through polymerization, despite reduced pressure environment in polymerization of the polyester resin. In other words, the amount of the aluminum compound is almost unchanged before and after polymerization; addition of the aluminum element in an amount of from 5 to 50 ppm by mass with respect to the intermediate results in the content of the aluminum element in the polyester resin (B) of from 5 to 50 ppm by mass.

Also, the phosphorus compound that works along with the aluminum compound as a catalyst is partially distilled off from the system under reduced pressure environment to polymerize the polyester resin, specifically, by approximately 10 to 40% of use amount initially added as the catalyst to the system. The percentage of the phosphorus compound removed from the system changes according to the addition mole ratio of the phosphorus element with respect to the aluminum element, basicity or acidity of the solution obtained by dissolving an aluminum compound added and the solution obtained by dissolving the phosphorus compound added, or a method for adding the aluminum compound-containing solution and the phosphorus compound-containing solution (whether the solutions are added in the form of one solution or added separately). Therefore, the amount of the phosphorus compound-containing solution added should appropriately be controlled so that an addition amount of the phosphorus compound in the polyester resin (B) as a final product preferably satisfies above (5).

The solution 'S' obtained by dissolving the aluminum compound and the solution 'T' obtained by dissolving the phosphorus compound are preferably added at the same time. In more preferred embodiment, the solution 'S' obtained by dissolving the aluminum compound and the solution 'T' obtained by dissolving the phosphorus compound may be prepared as a mixed solution in advance, by mixing them based on a ratio for adding them to the intermediate, and the obtained one solution is then added to the intermediate. The solutions may be made to one solution by a method of, for example, mixing the solutions in a tank or mixing them at confluence in the middle of piping for adding a catalyst in advance.

When the solutions or the one solution is added to a reaction chamber, the content of the reaction chamber is preferably stirred at higher speed. When the solutions or the one solution is added to piping connecting reaction chambers, apparatus such as an in-line mixer may be provided preferably to mix the solutions or the one solution quickly and uniformly.

In case where the solution 'S' obtained by dissolving the aluminum compound and the solution 'T' obtained by dissolving the phosphorus compound are separately added, a foreign matter originating from the aluminum compound is likely to be generated, causing a decrease in crystallization temperature during heating, an increase in crystallization

temperature during cooling, and insufficient catalyst activity. The simultaneous addition of the aluminum compound and the phosphorus compound enables rapid and effective formation of a complex having polymerization activity from the aluminum compound and the phosphorus compound. In contrast, separate addition of the aluminum compound and the phosphorus compound causes insufficient formation of the complex from the aluminum compound and the phosphorus compound. In addition, the aluminum compound failed to form a complex with the phosphorus compound may precipitate as a foreign matter.

The solution 'S' obtained by dissolving the aluminum compound and the solution 'T' obtained by dissolving the phosphorus compound are preferably added before the start of polymerization reaction and after the completion of esterification reaction or ester exchange reaction, more preferably the solutions are added to the intermediate after the first step and before the second step. The addition of the solutions before the completion of the esterification reaction or the ester exchange reaction may cause an increase in the amount of aluminum-based foreign matter.

The solution 'S' having the aluminum compound dissolved therein is preferably a glycol solution having the aluminum compound dissolved therein, and the solution 'T' having the phosphorus compound dissolved therein is preferably a glycol solution having the phosphorus compound dissolved therein. The glycol is preferably a glycol used for the polyester resin (B) and further preferably ethylene glycol.

<Heat treatment of phosphorus compound>

The phosphorus compound used to produce the polyester resin (B) is preferably a phosphorus compound after heat treatment in a solvent. The solvent is not limited as long as the solvent is at least one type selected from the group consisting of water and alkylene glycols. The alkylene glycol is preferably a solvent which can solve a phosphorus compound, and more preferably a glycol exemplified with ethylene glycol which is a constituent component of the polyester resin (B). The heat treatment of the phosphorus compound in the solvent is preferably conducted after the phosphorus compound is dissolved in the solvent, however, the phosphorus compound may not be completely dissolved.

The heat treatment is conducted under the conditions of a heat treatment temperature of from preferably 170 to 196°C, more preferably 175 to 185°C, further preferably 175 to 180°C, for heat treatment time of preferably from 30 to 240 minutes, and more preferably 50 to 210 minutes.

The concentration of the phosphorus compound during the heat treatment is preferably 3 to 10% by mass.

The heat treatment allows the acidity of the phosphorus compound contained in the glycol solution to be kept constant, further, the use of the aluminum compound along with the phosphorus compound enables improvement in polymerization activity, a decrease in the amount of aluminum-based foreign matter caused by the polymerization catalyst, and a decrease in the amount of the phosphorus compound distilled off in the polymerization step, leading to improvement in economic efficiency. Therefore, the phosphorus compound is preferably subjected to the heat treatment.

The present application claims benefit of priority to Japanese Patent Application No. 2022-130152 filed on August 17, 2022. The entire contents of the specification of Japanese Patent Application No. 2022-130152 filed on August 17, 2022 are incorporated herein by reference.

EXAMPLES

Hereinafter, the present invention will be described by means of Examples, however, the present invention is not limited to the Examples. The evaluation methods used in Examples and Comparative Examples are as follows.

[Evaluation Method]

(1) Intrinsic viscosity (IV)

About 3 g of a polyester resin sample was frozen and ground, and the obtained ground product was dried at 140°C for 15 minutes. Then, 0.20 g of the dried sample was weighed and made to a solution with a volume of 20 ml by mixing the sample with a mixed solvent of 1,1,2,2-tetrachloroethane and p-chlorophenol (1:3, mass ratio). The solution was stirred at 100°C for 60 minutes to completely dissolve the sample, and then the solution was cooled to room temperature. The resulting solution was then filtrated through a glass filter. Thus obtained sample solution and the solvent were measured to determine dropping time with an Ubbelohde viscometer (manufactured by RIGO Co., Ltd.) controlled to a temperature of 30°C. The intrinsic viscosity [η] was determined according to the following equation in which the meanings of abbreviations were as follows.

$$[\eta] = (-1 + \sqrt{(1 + 4K'\eta Sp)}) / 2K'C$$

$$\eta Sp = (\tau - \tau 0)\ \tau 0$$

[η]: intrinsic viscosity (dl/g)
ηSp: specific viscosity (-)
K': the Huggins constant (= 0.33)
C: concentration (= 1 g/dl)
τ: dropping time of sample (sec)
τ0: dropping time of solvent (sec)

(2) Content of metal element in polyester resin

The polyester resin (A1) described later was weighed in a platinum crucible, carbonized on an electric stove, and incinerated in a muffle furnace under the conditions of 550°C and 8 hours. The incinerated sample was dissolved in 1.2 M hydrochloric acid to prepare a sample solution. The sample solution prepared was measured under the following conditions to determine the contents of antimony element, germanium element, and titanium element in the polyester resin (A1) by high-frequency inductively coupled plasma emission spectrometry. Similarly, the content of antimony element in polyester resins (D1) described later was determined. In the measurement results, an element with a content of 1 ppm by mass or less was omitted from description. Further, the content of aluminum element in the polyester resin (B1), (B2), (B3) described later was similarly determined by above method.

Apparatus: CIROS-120, manufactured by SPECTRO
Plasma output: 1400 W
Plasma gas: 13.0 L/min
Auxiliary gas: 2.0 L/min
Nebulizer: cross flow nebulizer
Chamber: cyclone chamber
Measurement wavelength: 167.078 nm

(3) Content of Phosphorus Element in Polyester Resin (B)

First, 0.2 g of the polyester resin (B1) was subjected to wet decomposition with 3 mL of 97%-by-mass sulfuric acid, 3 mL of 60%-by-mass nitric acid, and 0.5 mL of 60%-by-mass perchloric acid, and then the resultant solution was neutralized with ammonia water. Then, 0.3 mL of 2%-by-mass ammonium molybdate and 0.3 mL of 0.5%-by-mass hydrazine sulfate were added to the prepared solution, and then an absorbance at a wavelength of 830 nm was measured by using an ultraviolet-visible absorptiometer (UV-1700 manufactured by Shimadzu Corporation). The concentration of phosphorus element in the polyester resin (B1) was obtained from a calibration curve generated in advance. Likewise, the concentration of phosphorus elements in the polyester resins (B2), (B3), and (B4) were obtained.
The amount of a sample of each of the polyester resins can be adjusted according to the concentration of the phosphorus element in the polyester resin.

(4) Amount of aluminum-based foreign matter of polyester resin (B)

In an Erlenmeyer flask (size: 500 mL) with a stirring bar, 30 g of the polyester resin (B1) and 250 mL of a solution containing p-chlorophenol/tetrachloroethane (3/1, mass ratio) were charged and the polyester resin was dissolved in the mixed solution by heating at a temperature of from 100 to 105°C for 1.5 hours with a hot stirrer. The resulting solution was filtrated to separate a foreign matter through a polytetrafluoroethylene membrane filter having a diameter of 47 mm and a pore size of 1.0 μm (PTFE membrane filter, product name: T100A047A, manufactured by TOYO ROSHI KAISHA,LTD). The effective filtration diameter was 37.5 mm. After the filtration, the filter was washed with 50 mL of chloroform and then dried.
The filtration surface of the membrane filter was subjected to a scanning fluorescent X-ray analyzer (ZSX100e, Rh line bulb: 4.0 kW, manufactured by RIGAKU) to quantify a content of aluminum element. The content of aluminum element was determined by measuring the center portion of the filter having a diameter of 30 mm. A calibration curve for the fluorescent X-ray analysis was prepared by using polyethylene terephthalate resin containing aluminum element at a known content and an apparent aluminum element content was represented by the unit of ppm. The measurement was conducted through detection of Al-Kα ray intensity at an X-ray output of 50 kV-70 mA with pentaerythritol as a spectroscopic crystal and PC (proportional counter) as a detector under the conditions of PHA (pulse height analyzer) of 100-300. The content of aluminum element in the polyethylene terephthalate resin for preparing a calibration curve was quantified

by high-frequency inductively coupled plasma emission spectrometry. In the same way, the amount of aluminum-based foreign matter in polyester resins (B2), (B3), and (B4) was determined.

(5) Detection of hindered phenol structure or residue by degradation of hindered phenol structure in sample

In 2.7 mL of a mixed solvent of hexafluoroisopropanol and deuterated benzene (1:1, mass ratio), 420 mg of sample was dissolved. To the resulting solution, 10 μL of deuterioacetone solution containing 25% of phosphoric acid was added, and the mixed solution was centrifuged to obtain a supernatant. Then, to the supernatant, trifluoroacetic acid was added in an amount of from 100 to 150 mg, and immediately after that, P-NMR measurement was conducted under the following conditions.

Apparatus: Fourier transform nuclear magnetic resonance device (AVANCE NEO 500, manufactured by BRUKER)
$^{31}$P resonance frequency: 202.456 MHz
Locking solvent: deuterated benzene
Flip angle of detected pulse: 65°
Incorporation time of data: 1.5 seconds
Retardation time: 0.5 seconds
Proton decoupling: full decoupling
Measurement temperature: from 25 to 35°C
Cumulative calculation numbers: from around 20000 to 30000 times

The followings are peak wavelengths of residues represented by the numbers of chemical formulae as shown in Table 1. Detection of these peak wavelengths indicated the presence of hindered phenol structure in a sample.

Chemical Formula 1: 34.5 ppm
Chemical Formula 2: 33.8 ppm
Chemical Formula 3: 31.9 ppm
Chemical Formula 4: 30.5 ppm
Chemical Formula 5: 30.1 ppm
Chemical Formula 6: 28.7 ppm
Chemical Formula 7: 53.6 ppm
Chemical Formula 8: 53.0 ppm
Chemical Formula 9: 51.3 ppm

(6) Quantification of cyclic trimer

A polyester resin sample was frozen and then ground or just ground, and 100 mg of the obtained sample was weighed precisely. The weighed sample was dissolved in 3 mL of a mixed solvent of hexafluoroisopropanol/chloroform (2/3, volume ratio), and the resulting solution was further diluted by adding 20 mL of chloroform. To the diluted solution, 10 mL of methanol was added to precipitate a polymer, and the precipitated polymer was separated by filtration. The filtrate was evaporated to dryness and made up to 10 mL with dimethylformamide. The cyclic trimer in the polyester resin was quantified by high performance liquid chromatography under the following conditions. The operation was repeated five times and the average of the measurement values was determined to be a CT content as a content of the cyclic trimer.

Apparatus: L-7000 (manufactured by Hitachi, Ltd.)
Column: μ-Bondasphere C18, 5 μ, 100 Å, 3.9 mm×15 cm (manufactured by Waters Corporation.)
Solvent:

Eluent A: 2% acetic acid/water (v/v)
Eluent B: acetonitrile

Gradient B%: 10 → 100% (0 → 55 minutes)
Flow rate: 0.8 mL/min
Temperature: 30°C
Detector: UV-259 nm

(7) Intrinsic viscosity retention rate of sample

The polyester resin sample was vacuum dried at 140°C for 16 hours to obtain dried polyester resin with a moisture content of 150 ppm or less. In the case of the polyester film, films were cut into a size of 1 cm squares to prepare a sample, and in the case of the polyester pellets, pellets were used as a sample. The dried polyester resin was then subjected to re-kneading treatment once with a two-screw extruder under the following conditions, and the intrinsic viscosity of the re-kneaded polyester resin was measured to calculate an intrinsic viscosity retention rate according to the following equation. Also, the dried polyester resin was re-kneaded three times with the two-screw extruder under the following conditions, then the intrinsic viscosity of the three times re-kneaded polyester resin was measured, and an intrinsic viscosity retention rate was calculated according to the following equation. The intrinsic viscosity was measured by the same method as descried in above (1).

Two-screw extruder: KZW15TW-45/60MG-NH(-2200), manufactured by TECHNOVEL CORPORATION
Set temperature: 260°C (actual temperature: from 268 to 270°C)
Screw rotation speed: 200 rpm
Discharge rate: from 1.7 to 2.0 kg/h

Intrinsic viscosity retention rate (%) = 100 × intrinsic viscosity of re-kneaded polyester resin/intrinsic viscosity of sample polyester resin

The moisture content was measured by using 0.6 g of sample and a Karl Fischer moisture meter (CA-200, manufactured by Mitsubishi Chemical Analytech Co., Ltd.) based on coulometric titration under the conditions of 230°C, 5 minutes, and nitrogen gas flow rate of 250 mL/min.

(8) Compositional analysis of polyester resin (A1)

In 0.6 ml of a mixed solvent of deuterated hexafluoroisopropanol and deuterated chloroform (1:9, volume ratio), 20 mg of the polyester resin (A1) was dissolved, and the mixture was centrifuged to collect a supernatant. By using the supernatant, $^1$H-NMR measurement was conducted under the following conditions.

Apparatus: Fourier transform nuclear magnetic resonance device (AVANCE NEO 600, manufactured by BRUKER)
$^1$H resonance frequency: 600.13 MHz
Locking solvent: deuterated chloroform
Flip angle: 30°
Incorporation time of data: 4 seconds
Retardation time: 1 second
Measurement temperature: 30°C
Cumulative calculation numbers: 128 times

(9) Contents of Dicarboxylic Acid Component and Glycol Component in BHET

Chemically recycled BHET was dissolved in deuterated methanol, and H-NMR measurement was performed under the following conditions.

Device: Fourier transform nuclear magnetic resonance device (manufactured by Bruker Corporation)
$^1$H resonance frequency: 500.13 MHz
Lock solvent: deuterated methanol
Flip angle: 45°
Data acquisition time: 4 seconds
Delay time: 1 second
Measurement temperature: 27°C
Number of times of integration: 36 times

Hereinafter, preparation of aluminum compound-containing ethylene glycol solution and phosphorus compound-containing ethylene glycol solution will be described.

<Preparation of aluminum compound-containing ethylene glycol solution 'S'>

In a preparation tank, an aqueous solution of basic aluminum acetate having concentration of 20 g/L and ethylene glycol having equivalent volume to the aqueous solution (volume ratio) were charged, and the mixture was stirred at room temperature of 23°C for several hours. While the mixture was further stirred at a temperature of from 50 to 90°C for several hours under reduced pressure (3 kPa), water was distilled off from the reaction system, and an aluminum compound-containing ethylene glycol solution 'S' with an aluminum compound at a concentration of 20 g/L was prepared.

<Preparation of phosphorus compound-containing ethylene glycol solutions 'T'>

A phosphorus compound of Irganox1222 (manufactured by BASF) was charged in a preparation tank along with ethylene glycol. The mixture was heated by stirring at 175°C for 150 minutes under nitrogen substituted atmosphere, and a phosphorus compound-containing ethylene glycol solution 'T' with a phosphorus compound at a concentration of 50 g/L was prepared.

[Manufacturing of Polyester Resins]

Polyester Resin (B1)

Chemically recycled BHET was set into a 10-L autoclave made of stainless steel and equipped with a stirrer, and a liquid mixture obtained by mixing the aluminum-containing ethylene glycol solution S and the phosphorus-containing ethylene glycol solution T prepared through the above methods so as to make these solutions into one liquid was added thereinto. The liquid mixture was produced such that the mass of the aluminum element and the mass of the phosphorus element were respectively 21 ppm by mass and 58 ppm by mass with respect to the mass of the obtained polyester. The addition molar ratio of the phosphorus element to the aluminum element was 2.41.

Thereafter, the temperature of the system was increased to 280°C over 1 hour. During this increase, the pressure of the system was gradually decreased to 0.15 kPa. Under this condition, a polycondensation reaction was caused to obtain a polyester resin having an intrinsic viscosity IV of 0.60 dl/g. Thereafter, the obtained polyester resin was extruded into the shape of a strand and was cut into the shapes of pellets of 2.5×3×4 mm. Then, a solid phase polymerization device in a batch style was used to perform solid phase polymerization at 230°C under a decreased pressure for 7 hours. Consequently, a polyester resin (B1) having an intrinsic viscosity IV of 0.75 dl/g and a CT content of 4600 ppm by mass was obtained. The remaining amounts of the aluminum element and the phosphorus element in the polyester resin (B1) were respectively 21 ppm by mass and 45 ppm by mass, and the remaining molar ratio of the phosphorus element to the aluminum element was 1.87. The content of aluminum element corresponding to aluminum-based foreign matter in the polyester resin (B1) was 710 ppm by mass; the polyester resin (B1) had an L value of 58.5; and the polyester resin (B1) had a hindered phenol structure therein. An intrinsic viscosity retention rate obtained after a first time of re-kneading was 98%, and an intrinsic viscosity retention rate obtained after a third time of re-kneading was 88%.

The chemically recycled BHET that was used had been obtained through a purification step of performing filtering, distillation, or the like after subjecting a recovered PET bottle and recovered polyester fibers to alkaline hydrolysis in ethylene glycol. The amounts of an isophthalic acid component and a diethylene glycol component in the chemically recycled BHET were respectively 1.0 mol% and 1.2 mol% (with respect to the total amount of all acid components).

Polyester Resin (B2)

A polyester resin (B2) having an intrinsic viscosity of 0.75 dl/g and a CT content of 4600 ppm by mass was obtained through the same method as that for the polyester resin (B1), except that the addition amounts of aluminum element and phosphorus element differed. The remaining amounts of the aluminum element and the phosphorus element in the polyester resin (B2) were respectively 16 ppm by mass and 26 ppm by mass, and the remaining molar ratio of the phosphorus element to the aluminum element was 1.42. The content of aluminum element corresponding to aluminum-based foreign matter in the polyester resin (B2) was 2000 ppm by mass; the polyester resin (B2) had an L value of 58.5; and the polyester resin (B2) had a hindered phenol structure therein. An intrinsic viscosity retention rate obtained after the first time of re-kneading was 97%, and an intrinsic viscosity retention rate obtained after the third time of re-kneading was 87%.

Polyester Resin (B3)

A polyester resin (B3) having an intrinsic viscosity of 0.75 dl/g and a CT content of 4600 ppm by mass was obtained through the same method as that for the polyester resin (B1), except that the addition amounts of aluminum element and phosphorus element differed. The remaining amounts of the aluminum element and the phosphorus element

in the polyester resin (B3) were respectively 10 ppm by mass and 16 ppm by mass, and the remaining molar ratio of the phosphorus element to the aluminum element was 1.39. The content of aluminum element corresponding to aluminum-based foreign matter in the polyester resin (B3) was 2300 ppm by mass; the polyester resin (B3) had an L value of 56.7; and the polyester resin (B3) had a hindered phenol structure therein. An intrinsic viscosity retention rate obtained after the first time of re-kneading was 96%, and an intrinsic viscosity retention rate obtained after the third time of re-kneading was 86%.

Polyester Resin (B4)

The polyester resin (B1) and silica particles having an average particle diameter of 2.5 μm were supplied into a twin-screw extruder and kneaded at 285°C, whereby pellets of a masterbatch containing 10000 ppm of the silica particles were produced.

Polyester Resin (D1)

Pellets (antimony element content: 230 ppm by mass, intrinsic viscosity: 0.75 dl/g) of polyethylene terephthalate obtained by using antimony trioxide as a catalyst were produced.

Polyester Resin (D2)

The polyester resin (D1) and silica particles having an average particle diameter of 2.5 μm were supplied into the twin-screw extruder and kneaded at 285°C, whereby pellets of a masterbatch containing 6000 ppm of the silica particles were produced.

[Recovered Polyester Resin]

Polyester Resin (A1)

Recovered polyester resin flakes provided from Kyoei Sangyo Co., Ltd. were used as a polyester resin (A1). The recovered polyester resin flakes were, as a result of composition analysis, found to contain 1.7 mol% of an isophthalic acid component and 2.1 mol% of a diethylene glycol component and have a CT content of 4900 ppm. The size of the flakes was 8.6 mm. The recovered polyester resin flakes had an intrinsic viscosity of 0.750 dl/g. The contents of antimony element and germanium element in the above recovered polyester resin flakes were respectively 190 ppm by mass and 1.6 ppm by mass. Since the content of titanium element was 1 ppm by mass or lower and very low, the content of the titanium element is not indicated in Table 2 and Table 3. The contents of the respective antimony, germanium, and titanium elements supported the fact that the above recovered polyester resin flakes are recovered polyester resin flakes containing, as a main component, a hollow molded body formed from a polyester resin produced with an antimony catalyst. The intrinsic viscosity retention rate of the polyester resin (A1) having been subjected to the first time of re-kneading was 88%, and the intrinsic viscosity retention rate of the polyester resin (A1) having been subjected to the third time of re-kneading was 77%.

(Examples, Comparative Examples, and Reference Example)

Each of the polyester resins was supplied into a single-screw extruder in the corresponding blending proportion (parts by mass) indicated in Table 2 and was melted at 290°C. Each of the resultant molten polymers was filtered with a filter medium (having such a nominal filtration accuracy as to eliminate 95% of 20-μm particles) as a sintered body made of stainless steel and was extruded into the shape of a sheet through a die onto a casting drum having a surface temperature of 30°C. Then, the sheet was cooled and solidified, whereby an unstretched film was made. In the supplying of the polyester resin, the polyester resin was mixed and supplied into a hopper in a small amount each time so as not to cause segregation.

The unstretched film was stretched in the longitudinal direction at 3.3 times at 95°C by using rolls having different circumferential speeds.

Subsequently, the uniaxially stretched film was guided to a tenter stretching machine and was guided to a hot air zone at a temperature of 125°C while end portions of the film were being gripped with clips. Then, the film was stretched in the width direction at 3.5 times. Next, while a width obtained by the stretching in the width direction was being maintained, heat setting treatment was performed at a temperature of 220°C for 10 seconds, and furthermore, relaxation treatment was performed by 3.0%. Thereafter, the film was cooled to 120°C, and both end portions (edge portion) thereof were cut with a shear blade, whereby a biaxially stretched PET film having a film thickness of 75 μm was obtained. The film was wound on a paper tube.

Evaluation of Recovery and Reusability of Film

The films produced in the Examples and the Comparative Examples and the recovered edge portions were cut, and film pieces obtained by the cutting were supplied into a twin-screw extruder and melt-kneaded at 290°C, whereby pellets were produced. The obtained pellets were further melt-kneaded again at 290°C, whereby pellets were produced.
A film was produced in the same manner by using the pellets obtained for the second time and was wound on a paper tube, to produce a re-melted resin film.
The side surface of the wound film was observed, and a difference in color tone was observed.

Good: No difference in color tone was perceived.
Fair: The re-melted resin film was slightly more yellowish.
Poor: The re-melted resin film was obviously more yellowish

[Table 2]

| | Ex. 1 | Ex. 2 | Ex. 3 | Ex. 4 | Ex. 5 | Ex. 6 | Com. Ex. 1 | Ex. 7 | Ex. 8 | Ex. 9 | Ex. 10 | Ex. 11 | Com. Ex. 2 | Ref. Ex. |
|---|---|---|---|---|---|---|---|---|---|---|---|---|---|---|
| A1 (Sb: 190 ppm, Ge: 1.6 ppm) (parts) | 10 | 30 | 50 | 70 | 90 | 95 | 95 | 50 | 50 | 70 | 95 | 50 | 50 | 0 |
| B1 (Al: 21 ppm, P: 45 ppm) (parts) | 85 | 65 | 45 | 25 | 5 | 0 | 0 | 45 | 0 | 25 | 0 | 0 | 0 | 0 |
| B2 (Al: 16 ppm, P: 26 ppm) (parts) | 0 | 0 | 0 | 0 | 0 | 0 | 0 | 0 | 45 | 0 | 0 | 0 | 0 | 0 |
| B3 (Al: 10 ppm, P: 16 ppm) (parts) | 0 | 0 | 0 | 0 | 0 | 0 | 0 | 0 | 0 | 0 | 0 | 45 | 0 | 0 |
| B4 (lubricating material MB made by using B1) (parts) | 5 | 5 | 5 | 5 | 5 | 5 | 0 | 0 | 5 | 5 | 5 | 5 | 0 | 0 |
| D1 (Sb: 230 ppm) (parts) | 0 | 0 | 0 | 0 | 0 | 0 | 0 | 0 | 0 | 0 | 0 | 0 | 45 | 95 |
| D2 (lubricating material MB made by using D1) (parts) | 0 | 0 | 0 | 0 | 0 | 0 | 5 | 5 | 0 | 0 | 0 | 0 | 5 | 5 |
| Film IV (dl/g) | 0.72 | 0.71 | 0.71 | 0.69 | 0.68 | 0.68 | 0.65 | 0.70 | 0.70 | 0.69 | 0.68 | 0.69 | 0.65 | 0.65 |
| CT content of film (ppm) | 5160 | 5470 | 5610 | 6240 | 6320 | 6350 | 6380 | 5630 | 5690 | 6290 | 6400 | 5710 | 6638 | 6520 |
| Amount of Sb in film (ppm) | 19 | 57 | 95 | 133 | 171 | 181 | 192 | 107 | 95 | 133 | 181 | 95 | 210 | 230 |
| Amount of Ge in film (ppm) | 0.16 | 0.48 | 0.80 | 1.12 | 1.44 | 1.52 | 1.52 | 0.80 | 0.80 | 1.12 | 1.52 | 0.80 | 0.80 | 0 |
| Amount of Al in film (ppm) | 18.90 | 14.70 | 10.50 | 6.30 | 2.10 | 1.05 | 0 | 9.45 | 8.25 | 6.30 | 1.05 | 5.55 | 0 | 0 |
| Amount of P in film (ppm) | 40.50 | 31.50 | 22.50 | 13.50 | 4.50 | 2.25 | 0 | 20.25 | 13.95 | 13.50 | 2.25 | 9.45 | 0 | 0 |
| Ratio of Sb/Al in film | 1.01 | 3.88 | 9.05 | 21.11 | 81.43 | 172.38 | - | 11.32 | 11.52 | 21.11 | 172.38 | 17.12 | - | - |
| Ratio of Sb/Al + B-derived P in film | 0.32 | 1.23 | 2.88 | 6.72 | 25.91 | 54.85 | - | 3.60 | 4.28 | 6.72 | 54.85 | 6.33 | - | - |

(continued)

| | Ex. 1 | Ex. 2 | Ex. 3 | Ex. 4 | Ex. 5 | Ex. 6 | Com. Ex. 1 | Ex. 7 | Ex. 8 | Ex. 9 | Ex. 10 | Ex. 11 | Com. Ex. 2 | Ref. Ex. |
|---|---|---|---|---|---|---|---|---|---|---|---|---|---|---|
| Intrinsic viscosity retention rate (one time of re-kneading) (%) | 94 | 94 | 95 | 92 | 91 | 90 | 86 | 92 | 95 | 91 | 90 | 91 | 86 | 86 |
| Intrinsic viscosity retention rate (three times of re-kneading) (%) | 87 | 87 | 85 | 82 | 80 | 80 | 76 | 83 | 85 | 81 | 80 | 83 | 75 | 75 |
| Coloring on end surfaces after re-formation of film | Good | Good | Good | Good | Fair | Fair | Poor | Good | Good | Good | Fair | Good | Poor | Poor |

Examples 12 to 15

Polyester resins for an intermediate layer indicated in Table 3 were supplied into an extruder 1, polyester resins for surface layers indicated in Table 3 were supplied into an extruder 2, and the polyester resins were melted at 285°C. A biaxially stretched PET film was manufactured, except that the ratio between the thicknesses of a surface layer, an intermediate layer, and a surface layer was set to 1:8:1 by using a die having three layers of two types.

In the evaluation of recovery and reusability of the film, a single layer configuration similar to that in Example 1 was obtained.

[Table 3]

| | | Ex. 12 | Ex. 13 | Ex. 14 | Ex. 15 |
|---|---|---|---|---|---|
| **Intermediate layer** | **A1 (parts)** | **70** | **70** | **70** | **80** |
| | **B1 (Al: 21 ppm, P: 45 ppm) (parts)** | **30** | **0** | **0** | **20** |
| | **B2 (Al: 16 ppm, P: 26 ppm) (parts)** | **0** | **30** | **0** | **0** |
| | **B3 (Al: 10 ppm, P: 16 ppm) (parts)** | **0** | **0** | **30** | **0** |
| **Surface layers** | **D1 (Sb: 230 ppm) (parts)** | **95** | **95** | **95** | **95** |
| | **D2 lubricating material MB (parts)** | **5** | **5** | **5** | **5** |
| **Coloring on end surfaces after re-formation of film** | | **Good** | **Good** | **Good** | **Good** |

Examples 16 and 17

Recovered flakes (IV=0.61 dl/g, Sb content: 140 ppm, with the amount of lubricant particles being a trace amount) of edge portions obtained from a manufacturing line for another polyester film were prepared as a polyester resin (A2), a resin obtained by performing melt polymerization in the same manner as for the polyester resin (B1) such that the intrinsic viscosity was set to 0.67 dl/g through the melt polymerization alone was prepared as a polyester resin (B5), and each of films was manufactured in the same manner as in Example 1 by using the polyester resins in Table 4. After each of the films was stretched in the longitudinal direction, both surfaces of the film were coated with an easily-adhesive coating material having the following composition. Then, the film was guided to a tenter, to obtain a biaxially stretched PET having an easily-adhesive layer on each of both surfaces thereof.

(Preparation of Easily-Adhesive Coating Material)

A transesterification reaction and a polycondensation reaction were caused through a usual method, to prepare a water-dispersible sulfonic acid metallic base-containing copolymerized polyester resin having a composition in which: 46 mol% of terephthalic acid, 46 mol% of isophthalic acid, and 8 mol% of sodium isophthalate-5-sulfonate were contained as dicarboxylic acid components (with respect to the total amount of all dicarboxylic acid components); and 50 mol% of ethylene glycol and 50 mol% of neopentyl glycol were contained as glycol components (with respect to the total amount of all glycol components). Subsequently, 51.4 parts by mass of water, 38 parts by mass of isopropyl alcohol, 5 parts by mass of n-butylcellosolve, and 0.06 parts by mass of a nonionic surfactant were mixed with one another, and then, the resultant mixture was heated and stirred. When the temperature of the mixture reached 77°C, 5 parts by mass of the above water-dispersible sulfonic acid metallic base-containing copolymerized polyester resin was added to the mixture which was then kept being stirred until there was no more resin clump. Then, the resultant aqueous resin dispersion was cooled to normal temperature. Consequently, an even water-dispersible copolymerized polyester resin liquid having a solid concentration of 5.0% by mass was obtained. Furthermore, 3 parts by mass of aggregate silica particles (SYLYSIA 310 manufactured by FUJI SILYSIA CHEMICAL LTD.) were dispersed in 50 parts by mass of water, and then 0.54 parts by mass of the aqueous dispersion of SYLYSIA 310 were added to 99.46 parts by mass of the above water-dispersible copolymerized polyester resin liquid. 20 parts by mass of water was added to the resultant mixture while the mixture was being stirred. Consequently, an easily-adhesive coating material was obtained.

[Table 4]

| | Ex. 16 | Ex. 17 |
|---|---|---|
| **A2 (parts)** | **50** | **70** |
| **B5 (Al: 21 ppm, P: 45 ppm) (parts)** | **50** | **30** |

(continued)

| | Ex. 16 | Ex. 17 |
|---|---|---|
| **Film IV (dl/g)** | **0.61** | **0.60** |
| **Intrinsic viscosity retention rate (one time of re-kneading) (%)** | **95** | **93** |
| **Intrinsic viscosity retention rate (three times of re-kneading) (%)** | **86** | **86** |
| **Coloring on end surfaces after re-formation of film** | **Good** | **Good** |

As indicated in Table 2, in Examples 1 to 6, higher intrinsic viscosity retention rates were obtained than in Comparative Example 1, Comparative Example 2, and Reference Example although the intrinsic viscosity retention rates tended to become lower as the amount of the polyester resin (B1) became smaller. Even in the case of the polyester resins (B2) and (B3) each having a low aluminum content and a low phosphorus content for decreasing cost as in Examples 7 to 11, the intrinsic viscosity retention rates were high. None of the Examples had any problem in terms of coloring on roll end surfaces after re-formation of the film.

Examples 12 to 15 in Table 3 are each an example in which the recovered polyester resin A1 was used for the intermediate layer. None of the Examples had any problem in terms of coloring on roll end surfaces after re-formation of the film.

Examples 16 and 17 in Table 4 are each an example in which the recovered polyester resin obtained from the film manufacturing process was used. None of these Examples had any problem either in terms of coloring on roll end surfaces after re-formation of the film.

INDUSTRIAL APPLICABILITY

When the polyester resin (B) which contains the aluminum compound and the phosphorus compound and which is obtained by using, as a raw material, bis(2-hydroxyethyl) terephthalate obtained through chemical recycling is mixed with the recovered polyester resin (A) so as to manufacture a polyester film, it is possible to obtain a polyester film that enables suppression of coloring on the polyester film and decrease in the molecular weight thereof and that has excellent recycling efficiency. The present invention can contribute to solving various problems such as suppression of resource depletion, decrease of marine debris, and suppression of global warming.

## Claims

**1.** A method for producing a polyester film, comprising the steps of:

mixing a recovered polyester resin (A) with a polyester resin (B) containing an aluminum compound and a phosphorus compound,
wherein the polyester resin (A) satisfies the following (1) to (3) and the polyester resin (B) satisfies the following (4):

(1) the polyester resin (A) comprises at least one element selected from antimony element, titanium element, and germanium element,
(2) a total content of the antimony element, the titanium element, and the germanium element in the polyester resin (A) is 2 to 500 ppm by mass,
(3) the polyester resin (A) has an intrinsic viscosity of 0.5 to 0.8 dl/g, and
(4) the polyester resin (B) is obtained by polycondensation of a raw material containing bis-2-hydroxyethyl terephthalate obtained by decomposing a polyester resin.

**2.** The method for producing a polyester film according to claim 1, wherein the polyester resin (B) satisfies the following (5) and (6):

(5) a content of aluminum element in the polyester resin (B) is 5 to 50 ppm by mass, and
(6) a content of phosphorus element in the polyester resin (B) is 5 to 1000 ppm by mass.

**3.** The method for producing a polyester film according to claim 1, wherein the mixing step comprises melting and mixing the polyester resin (A) and the polyester resin (B) to prepare a polyester resin composition (C).

4. The method for producing a polyester film according to claim 1, wherein the mixing step further comprises mixing a polyester resin (D) different from the polyester resin (A) and the polyester resin (B).

5. A method for producing a polyester film, comprising the steps of:
mixing a polyester resin composition (C) which is a melted mixture of a recovered polyester resin (A) and a polyester resin (B) comprising an aluminum compound and a phosphorus compound, and a polyester resin (D) different from the polyester resin (A) and the polyester resin (B), the polyester resin (A) satisfies the following (1) to (3), and the polyester resin (B) satisfies the following (4):

(1) the polyester resin (A) comprises at least one element selected from antimony element, titanium element, and germanium element,
(2) a total content of the antimony element, the titanium element, and the germanium element in the polyester resin (A) is 2 to 500 ppm by mass,
(3) the polyester resin (A) has an intrinsic viscosity of 0.5 to 0.8 dl/g, and
(4) the polyester resin (B) is obtained by polycondensation of a raw material containing bis-2-hydroxyethyl terephthalate obtained by decomposing polyester resin.

6. The method for producing a polyester film according to claim 3 or 5, wherein the polyester resin composition (C) has an intrinsic viscosity retention rate of 89% or more as calculated by the following formula.

Intrinsic viscosity retention rate (%) = Intrinsic viscosity of the once re-kneaded sample/intrinsic viscosity of the sample × 100

(The once re-kneaded sample is a sample subjected to a twin-screw extruder at a temperature of 260°C, screw speed of 200 rpm, and discharge rate of 1.7 to 2.0 kg/h. Intrinsic viscosity is calculated by subjecting a solution of 0.2 g of sample and 20 ml of a mixture of 1,1,2,2-tetrachloroethane and p-chlorophenol (mass ratio 1:3) to an Ubbelohde viscometer at 30°C.)

7. The method for producing a polyester film according to claim 1 or 5, wherein the polyester resin (A) has an intrinsic viscosity retention rate of 92% or less as calculated by the following formula.

Intrinsic viscosity retention rate (%) = Intrinsic viscosity of the once re-kneaded sample/intrinsic viscosity of the sample × 100

(The once re-kneaded sample is a sample subjected to a twin-screw extruder at a temperature of 260°C, screw speed of 200 rpm, and discharge rate of 1.7 to 2.0 kg/h. Intrinsic viscosity is calculated by subjecting a solution of 0.2 g of sample and 20 ml of a mixture of 1,1,2,2-tetrachloroethane and p-chlorophenol (mass ratio 1:3) to an Ubbelohde viscometer at 30°C.)

8. The method for producing a polyester film according to claim 1 or 5, wherein the polyester resin (B) has an intrinsic viscosity retention rate of 93% or more as calculated by the following formula.

Intrinsic viscosity retention rate (%) = Intrinsic viscosity of once re-kneaded sample/intrinsic viscosity of sample × 100

(The once re-kneaded sample is a sample subjected to a twin-screw extruder at a temperature of 260°C, screw speed of 200 rpm and discharge rate of 1.7 to 2.0 kg/h. Intrinsic viscosity is calculated by subjecting a solution of 0.2 g of sample and 20 ml of a mixture of 1,1,2,2-tetrachloroethane and p-chlorophenol (mass ratio 1:3) to an Ubbelohde viscometer at 30°C.)

9. The method for producing a polyester film according to claim 4 or 5, wherein the polyester resin composition (E) comprising the polyester resin (A), the polyester resin (B), and the polyester resin (D) has an intrinsic viscosity retention rate of 89% or more as calculated by the following formula.

Intrinsic viscosity retention rate (%) = Intrinsic viscosity of once re-kneaded sample/intrinsic viscosity of sample × 100

(The once re-kneaded sample is a sample subjected to a twin-screw extruder at a temperature of 260°C, screw speed

of 200 rpm, and discharge rate of 1.7 to 2.0 kg/h. Intrinsic viscosity is calculated by subjecting a solution of 0.2 g of sample and 20 ml of a mixture of 1,1,2,2-tetrachloroethane and p-chlorophenol (mass ratio 1:3) to an Ubbelohde viscometer at 30°C.)

**10.** The method for producing a polyester film according to claim 1 or 5, wherein a content of the polyester resin (A) is 5 to 95 parts by mass relative to 100 parts by mass of the total of the polyester resin (A) and the polyester resin (B).

**11.** The method for producing a polyester film according to claim 4 or 5, wherein a content of the polyester resin (D) is 5 to 95 parts by mass relative to 100 parts by mass of the total of the polyester resin (A), the polyester resin (B) and the polyester resin (D).

**12.** The method for producing a polyester film according to claim 1 or 5, wherein the polyester film is a multilayer polyester film comprising at least two layers, and at least one surface layer is a layer that does not contain the polyester resin (A).

**13.** The method for producing a polyester film according to claim 1 or 5, wherein the phosphorus compound has phosphorus element and phenol structure in the same molecule.

**14.** The method for producing a polyester film according to claim 1 or 5, wherein the polyester resin (A) comprises at least the antimony element and the germanium element.

**15.** The method for producing a polyester film according to claim 1 or 5, wherein the polyester resin (A) comprises at least an isophthalic acid component unit as a copolymerization component.

**16.** A polyester film comprising a polyester resin composition (E) comprising a recovered polyester resin (A) and a polyester resin (B) containing an aluminum compound and a phosphorus compound, wherein the polyester resin (A) satisfies the following (1) to (3) and the polyester resin (B) satisfies the following (4):

(1) the polyester resin (A) comprises at least one element selected from antimony element, titanium element, and germanium element,
(2) a total content of the antimony element, the titanium element, and the germanium element in the polyester resin (A) is 2 to 500 ppm by mass,
(3) the polyester resin (A) has an intrinsic viscosity of 0.5 to 0.8 dl/g, and
(4) the polyester resin (B) is obtained by polycondensation of a raw material containing bis-2-hydroxyethyl terephthalate as a polyester resin degradation component.

**17.** The polyester film according to claim 16, wherein the polyester resin (B) satisfies the following (5) and (6):

(5) a content of aluminum element in the polyester resin (B) is 5 to 50 ppm by mass, and
(6) a content of phosphorus element in the polyester resin (B) is 5 to 1000 ppm by mass.

**18.** The polyester film according to claim 16 or 17, wherein the polyester resin composition (E) further comprises a polyester resin (D) different from the polyester resin (A) and the polyester resin (B).

**19.** The polyester film according to claim 16 or 17, wherein the polyester resin composition (E) has an intrinsic viscosity retention rate of 89% or more as calculated by the following formula.

Intrinsic viscosity retention rate (%) = Intrinsic viscosity of once re-kneaded sample/intrinsic viscosity of sample $\times$ 100

(The once re-kneaded sample is a sample subjected to a twin-screw extruder at a temperature of 260°C, screw speed of 200 rpm, and discharge rate of 1.7 to 2.0 kg/h. The intrinsic viscosity is calculated by subjecting a solution of 0.2 g of the sample and 20 ml of a mixture of 1,1,2,2-tetrachloroethane and p-chlorophenol (mass ratio 1:3) to an Ubbelohde viscometer at 30°C.)

**20.** The polyester film according to claim 16 or 17, wherein the polyester resin composition (E) comprises at least the antimony element, the germanium element, the phosphorus element and the aluminum element.

**21.** The polyester film according to claim 20, wherein at least one polyester resin contained in the polyester resin

composition (E) comprising the film contains an isophthalic acid component unit as a copolymerization component.

**22.** The polyester film according to claim 16 or 17, wherein a content ratio of the antimony element/the aluminum element is from 0.5 to 200 on a mass basis.

**23.** The polyester film according to claim 16 or 17, wherein a content ratio of the antimony element/(the aluminum element and the phosphorus element) is from 0.1 to 100 on a mass basis.

**INTERNATIONAL SEARCH REPORT**

International application No. **PCT/JP2023/029576**

**A. CLASSIFICATION OF SUBJECT MATTER**

***C08L 67/00***(2006.01)i; ***C08G 63/78***(2006.01)i; ***C08J 5/18***(2006.01)i
FI: C08L67/00; C08G63/78; C08J5/18 CFD

According to International Patent Classification (IPC) or to both national classification and IPC

**B. FIELDS SEARCHED**

Minimum documentation searched (classification system followed by classification symbols)

C08L67/00; C08G63/78; C08J5/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2011-256328 A (TOYO SEIKAN CO., LTD.) 22 December 2011 (2011-12-22) claims, paragraphs [0006], [0012]-[0017], [0023], examples | 1, 3-16, 18-21<br>1-23 |
| Y | JP 2002-249650 A (TOYOBO CO., LTD.) 06 September 2002 (2002-09-06) claims, paragraphs [0017]-[0022], examples | 1-23 |
| Y | JP 2002-249558 A (TOYOBO CO., LTD.) 06 September 2002 (2002-09-06) claims, paragraphs [0016], [0017], examples | 1-23 |
| A | JP 2003-306536 A (TOYOBO CO., LTD.) 31 October 2003 (2003-10-31) entire text | 1-23 |
| A | JP 2008-030370 A (TOYOBO CO., LTD.) 14 February 2008 (2008-02-14) entire text | 1-23 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2023** | **17 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/029576**

| Patent document cited in search report | | | Publication date (day/month/year) | Patent family member(s) | Publication date (day/month/year) |
|---|---|---|---|---|---|
| JP | 2011-256328 | A | 22 December 2011 | (Family: none) | |
| JP | 2002-249650 | A | 06 September 2002 | (Family: none) | |
| JP | 2002-249558 | A | 06 September 2002 | (Family: none) | |
| JP | 2003-306536 | A | 31 October 2003 | (Family: none) | |
| JP | 2008-030370 | A | 14 February 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013154042 A
- WO 2013154043 A
- WO 2007032325 A
- JP 2006169432 A
- JP 2022130152 A